# EUROPEAN PATENT APPLICATION

(11) **EP 4 456 647 A1**
(43) Date of publication of application: **30.10.2024**
(21) Application number: 23745937.5
(22) Date of filing: 10.01.2023
(51) Int. Cl.: H04W 74/00

(54) **COMMUNICATION METHOD AND APPARATUS**

(30) Priority: 28.01.2022 CN 202210104119
(71) Applicant: Huawei Technologies Co., Ltd., Shenzhen, Guangdong 518129 (CN)
(72) Inventor: HAN, Chengcheng, Shenzhen, Guangdong 518129 (CN); GUO, Zhiheng, Shenzhen, Guangdong 518129 (CN); XIE, Xinqian, Shenzhen, Guangdong 518129 (CN); XUAN, Yidi, Shenzhen, Guangdong 518129 (CN)
(74) Representative: Goddar, Heinz J.
(86) International application number: PCT/CN2023/071589
(87) International publication number: WO 2023/143054

(57) **Abstract**

Embodiments of this application provide a communication method and a communication apparatus. The method includes: receiving a first synchronization signal block SSB from a network device, where the first SSB is one of P SSBs, the P SSBs belong to a same synchronization signal burst set, and P is an integer greater than 1; and sending a preamble sequence on a first random access occasion RO, where the first RO is one or more ROs associated with the first SSB in a first physical random access channel PRACH resource or a second PRACH resource, where the P SSBs are associated with ROs in the first PRACH resource in a first SSB index order, the P SSBs are associated with ROs in the second PRACH resource in a second SSB index order, and the first SSB index order is different from the second SSB index order. According to the method, the terminal device can perform random access in a scenario in which SBFD is supported, and a random access delay of the terminal device is reduced.

## Description

This application claims priority to Chinese Patent Application No. 202210104119.8, filed with the China National Intellectual Property Administration on January 28, 2022 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

With rapid development of the fifth generation mobile communication technology, namely, new radio (new radio, NR), diversified communication requirements emerge. To meet requirements of the emerging services, a subband full duplex (subband full duplex, SBFD) solution is proposed to improve uplink coverage of a time division duplex (time division duplex, TDD) system. Subband full duplex refers to a technology in which a network device implements uplink transmission and downlink transmission over different subbands in a same carrier. In this way, both receiving and sending can be performed in one slot or on one orthogonal frequency division multiplexing (orthogonal frequency division multiplexing, OFDM) symbol.

To achieve uplink synchronization, a terminal device may need to perform random access. The terminal device receives a synchronization signal and PBCH block (synchronization signal and PBCH block, SSB) from the network device, and sends a physical random access channel (physical random access channel, PRACH) on a random access occasion (random access occasion, RO) associated with the SSB. Currently, all PRACHs are transmitted on a component carrier (component carrier, CC) that supports only uplink transmission. However, after SBFD is introduced, how to perform random access is an urgent problem to be resolved.

### SUMMARY

Embodiments of this application provide a communication method and a communication apparatus, so that a terminal device can perform random access in a scenario in which SBFD is supported.

According to a first aspect, a communication method is provided. The method may be performed by a terminal device, or may be performed by a component (for example, a chip or a circuit) of the terminal device. This is not limited. For ease of description, the following uses an example in which the method is performed by the terminal device for description.

The method may include: receiving a first synchronization signal block SSB from a network device, where the first SSB is one of P SSBs, the P SSBs belong to a same synchronization signal burst set, and P is an integer greater than 1; and sending a preamble sequence on a first random access occasion RO associated with the first SSB, where the first RO is one or more ROs associated with the first SSB in a first physical random access channel PRACH resource or a second PRACH resource, where the P SSBs are associated with ROs in the first PRACH resource in a first SSB index order, the P SSBs are associated with ROs in the second PRACH resource in a second SSB index order, and the first SSB index order is different from the second SSB index order.

Optionally, the first PRACH resource is a PRACH resource that can be used by an SBFD terminal device during random access but cannot be used by a non-SBFD terminal device, and the second PRACH resource is a PRACH resource that can be used by both the SBFD terminal device and the non-SBFD terminal device. For example, the first PRACH resource is a PRACH resource configured on an uplink subband in an SBFD time unit, and the second PRACH resource is a PRACH resource configured in an uplink time unit.

Optionally, in this application, the non-SBFD terminal device may also be understood as a terminal device that does not support SBFD, a terminal device of an earlier version, or a legacy (legacy) terminal device.

Optionally, in this application, the SBFD terminal device may also be understood as a terminal device that supports SBFD or a terminal device of a later version.

In the foregoing technical solution, a specific implementation of random access of the terminal device in an SBFD solution is specified. In the method, the first PRACH resource and the second PRACH resource are considered as two different resources. The SSBs in the synchronization signal burst set are associated with the ROs in the first PRACH resource and associated with the ROs in the second PRACH resource in different SSB index orders. An RO association of the SSBs in the first PRACH resource does not affect a previous RO association of the SSBs in the second PRACH resource, so that the first PRACH resource and the second PRACH resource can coexist. In this way, the terminal device can perform random access over the first PRACH resource and the second PRACH resource in the SBFD solution. Further, the first PRACH resource is configured on a carrier supporting SBFD, so that the terminal device can perform random access on the carrier supporting SBFD. In addition, both the first PRACH resource and the second PRACH resource can be used for random access. This reduces random access failures caused by strained PRACH resources, and reduces a random access delay of the terminal device.

With reference to the first aspect, in some implementations of the first aspect, the first SSB index order is a descending order of SSB indexes, and the second SSB index order is an ascending order of the SSB indexes.

In the foregoing technical solution, when the first PRACH resource and the second PRACH resource are jointly used, the SSBs in the synchronization signal burst set are associated with the ROs in the two PRACH resources in reverse SSB index orders. In this way, an RO-SSB association periodicity can be formed more quickly, and access waiting time of the terminal device is reduced. In addition, the second SSB index order is an order supported by the non-SBFD terminal device. Therefore, this solution does not affect random access of the non-SBFD terminal device, so that the non-SBFD terminal device and the SBFD terminal device can better coexist. With reference to the first aspect, in some implementations of the first aspect, the second SSB index order is an ascending order of the SSB indexes, and the first SSB index order is determined based on the second SSB index order. With reference to the first aspect, in some implementations of the first aspect, the first SSB index order is determined based on the second SSB index order and a greedy algorithm.

In the foregoing technical solution, based on an RO association order of the SSBs in the synchronization signal burst set in the second PRACH resource, an RO association order of the SSBs in the synchronization signal burst set on the first PRACH resource is adjusted in a greedy manner. Compared with a reverse-order association, the association order can be used to form an RO-SSB association periodicity more quickly, to further reduce access waiting time of the terminal device.

With reference to the first aspect, in some implementations of the first aspect, the first PRACH resource is in a subband full duplex time unit, and the second PRACH resource is in an uplink time unit.

It should be understood that, in this application, in an SBFD time unit, one carrier includes a first subband and a second subband, and transmission directions of the first subband and the second subband are different. The first subband and the second subband do not overlap, partially overlap, or completely overlap in frequency domain. In this application, a subband may also be understood as a frequency domain resource.

It should be noted that the first subband and the second subband are two types of subbands with different transmission directions. This does not mean that one carrier includes only two subbands. That is, one carrier may include N subbands, where N is an integer greater than or equal to 2.

In this application, that the transmission directions of the first subband and the second subband are different may be understood as follows: The first subband and the second subband have inconsistent directions on at least one symbol in time domain.

With reference to the first aspect, in some implementations of the first aspect, a quantity of frequency division multiplexed ROs in the second PRACH resource is M, where M is a positive integer. A quantity of frequency division multiplexed ROs in the first PRACH resource is N, where N is a positive integer less than or equal to M. The second PRACH resource is located on a first carrier, the first PRACH resource is located on a first subband that is in the first carrier and that is used for uplink transmission, and bandwidths of the N ROs are less than or equal to a bandwidth of the first subband.

In the foregoing technical solution, without increasing signaling overheads, a rule for interpreting existing signaling by the SBFD terminal device is predefined, so that the first PRACH resource is configured in frequency domain.

With reference to the first aspect, in some implementations of the first aspect, the method further includes: receiving first information from the network device, where the first information indicates that the quantity of frequency division multiplexed ROs in the second PRACH resource is M.

With reference to the first aspect, in some implementations of the first aspect, when the bandwidth of the first subband is greater than or equal to bandwidths of the M ROs, N is equal to M; or when the bandwidth of the first subband is less than the bandwidths of the M ROs, N is an integer that is in 1, 2, 4, and 8 and that enables the first PRACH resource to occupy a maximum bandwidth on the first subband.

In the foregoing technical solution, the frequency domain resource of the first subband may be fully utilized, that is, the use of the first PRACH resource is maximized, so that the SBFD terminal device can use more PRACH resources during random access.

With reference to the first aspect, in some implementations of the first aspect, a frequency domain start position of the first PRACH resource is a first RB of the first subband, or a frequency domain end position of the first PRACH resource is a last RB of the first subband.

In the foregoing technical solution, continuous resources may be reserved in frequency domain for sending other data without damaging resource continuity.

With reference to the first aspect, in some implementations of the first aspect, the method further includes: receiving first signaling from the network device, where the first signaling includes second information and position information of the second PRACH resource in one PRACH periodicity, and the second information includes a common parameter used to determine time domain position information of the first PRACH resource and time domain position information of the second PRACH resource; receiving second signaling from the network device, where the second signaling includes information indicating a position of the first PRACH resource in one PRACH periodicity; determining a time domain position of the second PRACH resource based on the first signaling; and determining a time domain position of the first PRACH resource based on the common parameter and the second signaling.

In the foregoing technical solution, a time-frequency position of the first PRACH resource is flexibly configured by adding new signaling.

With reference to the first aspect, in some implementations of the first aspect, the common parameter includes one or more of the following parameters: a PRACH periodicity, a preamble configuration, and a quantity and positions of ROs in one PRACH slot.

According to a second aspect, a communication method is provided. The method may be performed by a network device, or may be performed by a component (for example, a chip or a circuit) of the network device. This is not limited. For ease of description, the following uses an example in which the method is performed by the network device for description.

The method may include: sending a first synchronization signal block SSB to a terminal device, where the first SSB is one of P SSBs, the P SSBs belong to a same synchronization signal burst set, and P is an integer greater than 1; and receiving, from the terminal device, a preamble sequence on a first RO associated with the first SSB, where the first RO is one or more ROs associated with the first SSB in a first PRACH resource or a second PRACH resource, where the P SSBs are associated with random access occasions ROs in the first physical random access channel PRACH resource in a first SSB index order, the P SSBs are associated with ROs in the second PRACH resource in a second SSB index order, and the first SSB index order is different from the second SSB index order.

Optionally, the first PRACH resource is a PRACH resource that can be used by an SBFD terminal device during random access but cannot be used by a non-SBFD terminal device, and the second PRACH resource is a PRACH resource that can be used by both the SBFD terminal device and the non-SBFD terminal device. For example, the first PRACH resource is a PRACH resource configured on an uplink subband in an SBFD time unit, and the second PRACH resource is a PRACH resource configured in an uplink time unit.

In the foregoing technical solution, a specific implementation of random access of the terminal device in an SBFD solution is specified. In the method, the first PRACH resource and the second PRACH resource are considered as two different resources. The SSBs in the synchronization signal burst set are associated with the ROs in the first PRACH resource and associated with the ROs in the second PRACH resource in different SSB index orders. An RO association of the SSBs in the first PRACH resource does not affect a previous RO association of the SSBs in the second PRACH resource, so that the first PRACH resource and the second PRACH resource can coexist. In this way, the terminal device can perform random access over the first PRACH resource and the second PRACH resource in the SBFD solution. Further, the first PRACH resource is configured on a carrier supporting SBFD, so that the terminal device can perform random access on the carrier supporting SBFD. In addition, both the first PRACH resource and the second PRACH resource can be used for random access. This reduces random access failures caused by strained PRACH resources, and reduces a random access delay of the terminal device.

With reference to the second aspect, in some implementations of the second aspect, the first SSB index order is a descending order of SSB indexes, and the second SSB index order is an ascending order of the SSB indexes.

In the foregoing technical solution, when the first PRACH resource and the second PRACH resource are jointly used, the SSBs in the synchronization signal burst set are associated with the ROs in the two PRACH resources in reverse SSB index orders. In this way, an RO-SSB association periodicity can be formed more quickly, and access waiting time of the terminal device is reduced. In addition, the second SSB index order is an order supported by the non-SBFD terminal device. Therefore, this solution does not affect random access of the non-SBFD terminal device, so that the non-SBFD terminal device and the SBFD terminal device can better coexist.

With reference to the second aspect, in some implementations of the second aspect, the second SSB index order is an ascending order of the SSB indexes, and the first SSB index order is determined based on the second SSB index order.

With reference to the second aspect, in some implementations of the second aspect, the first SSB index order is determined based on the second SSB index order and a greedy algorithm.

In the foregoing technical solution, based on an RO association order of the SSBs in the synchronization signal burst set in the second PRACH resource, an RO association order of the SSBs in the synchronization signal burst set on the first PRACH resource is adjusted in a greedy manner. Compared with a reverse-order association, the association order can be used to form an RO-SSB association periodicity more quickly, to further reduce access waiting time of the terminal device

With reference to the second aspect, in some implementations of the second aspect, the first PRACH resource is in a subband full duplex time unit, and the second PRACH resource is in an uplink time unit.

With reference to the second aspect, in some implementations of the second aspect, a quantity of frequency division multiplexed ROs in the second PRACH resource is M, where M is a positive integer. A quantity of frequency division multiplexed ROs in the first PRACH resource is N, where N is a positive integer less than or equal to M. The second PRACH resource is located on a first carrier, the first PRACH resource is located on a first subband that is in the first carrier and that is used for uplink transmission, and bandwidths of the N ROs are less than or equal to a bandwidth of the first subband.

In the foregoing technical solution, without increasing signaling overheads, a rule for interpreting existing signaling by the SBFD terminal device is predefined, so that the first PRACH resource is configured in frequency domain.

With reference to the second aspect, in some implementations of the second aspect, the method further includes: receiving first information from the network device, where the first information indicates that the quantity of frequency division multiplexed ROs in the second PRACH resource is M.

With reference to the second aspect, in some implementations of the second aspect, when the bandwidth of the first subband is greater than or equal to bandwidths of the M ROs, N is equal to M; or when the bandwidth of the first subband is less than the bandwidths of the M ROs, N is an integer that is in 1, 2, 4, and 8 and that enables the first PRACH resource to occupy a maximum bandwidth on the first subband.

In the foregoing technical solution, a frequency domain resource of the first subband may be fully utilized, so that the SBFD terminal device can use more PRACH resources during random access.

With reference to the first aspect, in some implementations of the first aspect, a frequency domain start position of the first PRACH is a first RB of the first subband, or a frequency domain end position of the first PRACH is a last RB of the first subband.

In the foregoing technical solution, continuous resources may be reserved in frequency domain for sending other data without damaging resource continuity.

With reference to the second aspect, in some implementations of the second aspect, the method further includes: sending first signaling to the terminal device, where the first signaling includes second information and position information of the second PRACH resource in one PRACH periodicity, and the second information includes a common parameter used to determine time domain position information of the first PRACH resource and time domain position information of the second PRACH resource; sending second signaling to the terminal device, where the second signaling includes information indicating a position of the first PRACH resource in one PRACH periodicity; determining a time domain position of the second PRACH resource based on the first signaling; and determining a time domain position of the first PRACH resource based on the common parameter and the second signaling.

In the foregoing technical solution, a time-frequency position of the first PRACH resource is flexibly configured by adding new signaling.

With reference to the second aspect, in some implementations of the second aspect, the common parameter includes one or more of the following parameters: a PRACH periodicity, a preamble configuration, and a quantity and positions of ROs in one PRACH slot.

According to a third aspect, a communication method is provided. The method may be performed by a terminal device, or may be performed by a component (for example, a chip or a circuit) of the terminal device. This is not limited. For ease of description, the following uses an example in which the method is performed by the terminal device for description.

The method may include: determining that a quantity of frequency division multiplexed ROs in a second PRACH resource is M, where M is a positive integer; and determining that a quantity of frequency division multiplexed ROs in a first PRACH resource is N, where N is a positive integer less than or equal to M, where the second PRACH resource is located on a first carrier, the first PRACH resource is located on a first subband that is in the first carrier and that is used for uplink transmission, and bandwidths of the N ROs are less than or equal to a bandwidth of the first subband.

In the foregoing technical solution, without increasing signaling overheads, a rule for interpreting existing signaling by an SBFD terminal device is predefined, so that the first PRACH resource is configured in frequency domain.

With reference to the third aspect, in some implementations of the third aspect, the method further includes: receiving first information from a network device, where the first information indicates that the quantity of frequency division multiplexed ROs in the second PRACH resource is M.

With reference to the third aspect, in some implementations of the third aspect, the determining that a quantity of frequency division multiplexed ROs in a first PRACH resource is N includes: when the bandwidth of the first subband is greater than or equal to bandwidths of the M ROs, determining that the quantity of frequency division multiplexed ROs in the first PRACH resource is M; or when the bandwidth of the first subband is less than bandwidths of the M ROs, determining that N is an integer that is in 1, 2, 4, and 8 and that enables the first PRACH resource to occupy a maximum bandwidth on the first subband.

In the foregoing technical solution, a frequency domain resource of the first subband may be fully utilized, so that the subband full duplex terminal device can use more PRACH resources during random access.

With reference to the third aspect, in some implementations of the third aspect, a frequency domain start position of the first PRACH resource is a first RB of the first subband, or a frequency domain end position of the first PRACH resource is a last RB of the first subband.

In the foregoing technical solution, continuous resources may be reserved in frequency domain for sending other data without damaging resource continuity.

According to a fourth aspect, a communication apparatus is provided. The apparatus is configured to perform the method according to the first aspect. Specifically, the apparatus may include a unit and/or a module, for example, a processing unit and/or a communication unit, configured to perform the method according to any one of the first aspect or the third aspect and the possible implementations of the first aspect or the third aspect.

In an implementation, the apparatus is a terminal device. When the apparatus is the terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fifth aspect, a communication apparatus is provided. The apparatus is configured to perform the method according to the second aspect. Specifically, the apparatus may include a unit and/or a module, for example, a processing unit and/or a communication unit, configured to perform the method according to any one of the second aspect and the possible implementations of the second aspect.

In an implementation, the apparatus is a network device. When the apparatus is the network device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a network device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a sixth aspect, a communication apparatus is provided. The apparatus includes at least one processor, the at least one processor is coupled to at least one memory, the at least one memory is configured to store a computer program or instructions, and the at least one processor is configured to: invoke the computer program or the instructions from the at least one memory and run the computer program or the instructions, to enable the communication apparatus to perform the method according to any one of the first aspect or the third aspect and the possible implementations of the first aspect or the third aspect.

In an implementation, the apparatus is a terminal device.

In another implementation, the apparatus is a chip, a chip system, or a circuit used in a terminal device.

According to a seventh aspect, a communication apparatus is provided. The apparatus includes at least one processor, the at least one processor is coupled to at least one memory, the at least one memory is configured to store a computer program or instructions, and the at least one processor is configured to: invoke the computer program or the instructions from the at least one memory and run the computer program or the instructions, to enable the communication apparatus to perform the method according to any one of the second aspect and the possible implementations of the second aspect.

In an implementation, the apparatus is a network device.

In another implementation, the apparatus is a chip, a chip system, or a circuit used in a network device.

According to an eighth aspect, this application provides a processor, configured to perform the methods according to the foregoing aspects.

Operations such as sending and obtaining/receiving related to the processor may be understood as operations such as output and receiving or input of the processor, or sending and receiving operations performed by a radio frequency circuit and an antenna, unless otherwise specified, or provided that the operations do not contradict actual functions or internal logic of the operations in related descriptions. This is not limited in this application.

According to a ninth aspect, a computer-readable storage medium is provided. The computer-readable storage medium stores program code to be executed by a device, and the program code is used to perform the method according to any one of the first aspect, the second aspect, or the third aspect and the possible implementations of the first aspect, the second aspect, or the third aspect.

According to a tenth aspect, a computer program product including instructions is provided. When the computer program product runs on a computer, the computer is enabled to perform the method according to any one of the first aspect, the second aspect, or the third aspect and the possible implementations of the first aspect, the second aspect, or the third aspect.

According to an eleventh aspect, a chip is provided. The chip includes a processor and a communication interface. The processor reads, through the communication interface, instructions stored in a memory, to perform the method according to any one of the first aspect, the second aspect, or the third aspect and the possible implementations of the first aspect, the second aspect, or the third aspect.

Optionally, in an implementation, the chip further includes a memory. The memory stores a computer program or instructions. The processor is configured to execute the computer program or the instructions stored in the memory. When the computer program or the instructions is/are executed, the processor is configured to perform the method according to any one of the first aspect, the second aspect, or the third aspect and the possible implementations of the first aspect, the second aspect, or the third aspect.

According to a twelfth aspect, a communication system is provided. The communication system includes the communication apparatuses shown in the sixth aspect and the seventh aspect.

### BRIEF DESCRIPTION OF DRAWINGS

FIG. 1 is a diagram of a communication system according to an embodiment of this application;
FIG. 2 is a diagram of time-frequency division of a typical SBFD solution;
FIG. 3 is a schematic flowchart of contention-based random access;
FIG. 4 is a diagram of a time domain position of a PRACH resource;
FIG. 5 is a diagram of a frequency domain position of a PRACH resource;
FIG. 6 is a diagram of an RO-SSB association periodicity;
FIG. 7 is a diagram of an RO association, of an SSB in a PRACH resource, understood by a subband full duplex terminal device and a non-subband full duplex terminal device;
FIG. 8 is a schematic flowchart of a communication method according to this application;
FIG. 9 is a diagram of a reverse-order association according to this application;
FIG. 10 is another diagram of a reverse-order association according to this application;
FIG. 11 is a diagram of a parity-reverse-order association according to this application;
FIG. 12 is a diagram of a greedy association according to this application;
FIG. 13 is another diagram of a greedy association according to this application;
FIG. 14 is another diagram of a greedy association according to this application;
FIG. 15 is a diagram in which an SBFD terminal device determines an RO on a first subband of an FD slot according to a predefined signaling understanding rule;
FIG. 16 is a diagram of PRACH resource time-frequency positions determined by a subband full duplex terminal device and a non-subband full duplex terminal device after the subband full duplex terminal device and the non-subband full duplex terminal device interpret a PRACH resource time-frequency position parameter indicated by a network device;
FIG. 17 is a schematic flowchart of a method for indicating a first PRACH resource and a second PRACH resource by a network device according to this application;
FIG. 18 is a schematic block diagram of a communication apparatus 1000 according to this application; and
FIG. 19 is a diagram of a structure of a communication apparatus 10 according to this application.

### DESCRIPTION OF EMBODIMENTS

The following describes the technical solutions in embodiments of this application with reference to the accompanying drawings.

The technical solutions in embodiments of this application may be applied to various communication systems, for example, a 5th generation (5th generation, 5G) system, a new radio (new radio, NR) system, a long term evolution (long term evolution, LTE) system, an internet of things (internet of things, IoT) system, a wireless fidelity (wireless fidelity, Wi-Fi) system, a wireless communication system related to the 3rd generation partnership project (3rd generation partnership project, 3GPP), or other future wireless communication systems.

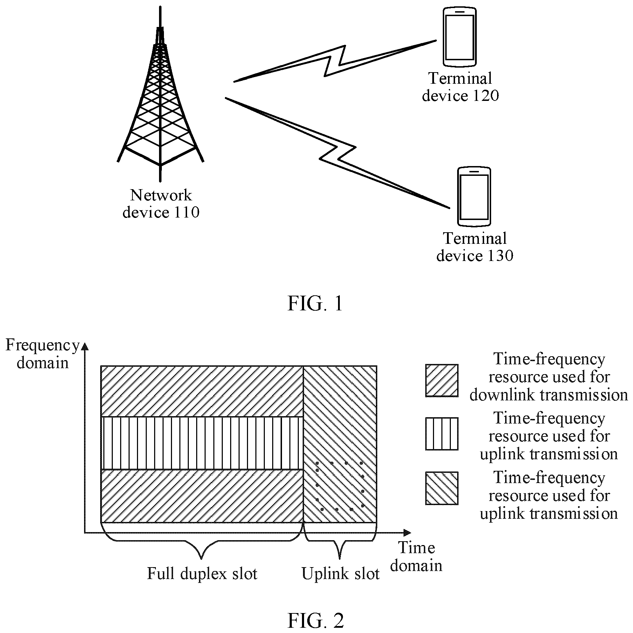

FIG. 1 is a diagram of a communication system according to an embodiment of this application. The communication system 100 includes at least one network device, for example, a network device 110 shown in FIG. 1. The communication system 100 may further include at least one terminal device, for example, a terminal device 120 and/or a terminal device 130 shown in FIG. 1. The network device 110 may communicate with the terminal device 120/130 through a radio link, to exchange information. It may be understood that the network device and the terminal device may also be referred to as communication devices.

The network device is a network side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved base station (evolved NodeB, eNodeB), a next generation base station (next generation NodeB, gNB) in a 5G mobile communication system, a subsequently evolved base station of 3GPP, a transmission reception point (transmission reception point, TRP), an access node in a Wi-Fi system, a wireless relay node, or a wireless backhaul node. In communication systems using different radio access technologies (radio access technologies, RATs), names of devices having a base station function may be different. For example, the base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include one or more central units (central units, CUs), one or more distributed units (distributed units, DUs), or one or more CUs and one or more DUs. For example, functions of the CU may be implemented by one entity or different entities. For example, the functions of the CU may be further divided. To be specific, a control plane and a user plane are separated, and the functions are implemented by using different entities: a control plane CU entity (namely, a CU-CP entity) and a user plane CU entity (namely, a CU-UP entity). The CU-CP entity and the CU-UP entity may be coupled to the DU, to jointly complete a function of an access network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. In this way, some functions of the radio access network device may be implemented by a plurality of network function entities. These network function entities may be network elements in a hardware device, may be software functions run on dedicated hardware, or may be virtualized functions instantiated on a platform (for example, a cloud platform). The network device may further include an active antenna unit (active antenna unit, AAU for short). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. For another example, in a vehicle to everything (vehicle to everything, V2X) technology, the access network device may be a road side unit (road side unit, RSU). A plurality of access network devices in the communication system may be base stations of a same type, or may be base stations of different types. The base station may communicate with the terminal device, or may communicate with the terminal device through a relay station. In embodiments of this application, an apparatus configured to implement a function of the network device may be the network device, or may be an apparatus that can support the network device in implementing the function, for example, a chip system or a combined component or a device that can implement a function of the access network device. The apparatus may be installed in the network device. In embodiments of this application, the chip system may include a chip, or may include a chip and another discrete component.

The terminal device is a user-side device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, cellular communication, device-to-device (device-to-device, D2D) communication, V2X communication, machine-to-machine/machine type communication (machine-to-machine /machine-type communication, M2M/MTC), an internet of things, virtual reality (virtual reality, VR), augmented reality (augmented reality, AR), industrial control (industrial control), self-driving (self-driving), remote medical (remote medical), a smart grid (smart grid), smart furniture, a smart office, a smart wearable, smart transportation, a smart city (smart city), an uncrewed aerial vehicle, and a robot. For example, the terminal device may be a handheld terminal in the cellular communication, a communication device in the D2D, an IoT device in the MTC, a surveillance camera in the smart transportation and the smart city, or a communication device in the uncrewed aerial vehicle. The terminal device may be sometimes referred to as user equipment (user equipment, UE), a user terminal, a user apparatus, a subscriber unit, a subscriber station, a terminal, an access terminal, an access station, a UE station, a remote station, a mobile device, a wireless communication device, or the like. In embodiments of this application, an apparatus configured to implement a function of the terminal device may be the terminal device, or may be an apparatus that can support the terminal device in implementing the function, for example, a chip system or a combined component or a device that can implement the function of the terminal device. The apparatus may be installed in the terminal device.

For ease of understanding of embodiments of this application, concepts and related procedures in this application are first described.
1. Symbol (symbol): Is short for a time domain symbol, and also be referred to as an OFDM symbol. It should be noted that the time domain symbol may be alternatively named in combination with another multiple access manner. This is not limited in embodiments of this application. For different subcarrier spacings, lengths of time domain symbols may be different.
2. Time unit: The time unit may be a slot (slot), a symbol, a subframe, a frame, a mini-subframe, or a mini-slot. This is not limited in this application.
3. Subband: The subband is a part of a frequency band in a carrier, that is, one or more physical resource blocks (physical resource blocks, PRBs) in frequency domain. In this application, the subband may also be understood as a frequency domain resource.
4. Non-full-duplex slot: Each symbol of all symbols included in the non-full-duplex slot has only one transmission direction. For example, all the symbols in the non-full-duplex slot are downlink symbols; all the symbols in the non-full-duplex slot are uplink symbols; some symbols in the non-full-duplex slot are downlink symbols and some are uplink symbols; some symbols in the non-full-duplex slot are downlink symbols, some are uplink symbols, and some are flexible symbols; some symbols in the non-full-duplex slot are downlink symbols and some are flexible symbols; or some symbols in the non-full-duplex slot are uplink symbols and some are flexible symbols. In FIG. 2, a long block filled with right slashes represents a group of time-frequency resources used for uplink transmission, and slots in a time domain range that are occupied by the time-frequency resources are referred to as uplink slots, which are non-full-duplex (non-FD) slots or non-SBFD (non-SBFD) slots.
5. Full duplex slot: Time-frequency division of a typical SBFD solution is shown in FIG. 2. The horizontal axis represents time domain, and the vertical axis represents frequency domain. In FIG. 2, two long blocks filled with left slashes each represent a group of time-frequency resources used for downlink transmission, and a long block filled with vertical bars represents a group of time-frequency resources used for uplink transmission. Slots in a time domain range that are occupied by the three time-frequency resources are referred to as full duplex (full duplex, FD) slots or SBFD slots.
   It should be understood that, in a full duplex slot, one carrier includes a first subband and a second subband, and transmission directions of the first subband and the second subband are different. It should be noted that the first subband and the second subband are two types of subbands with different transmission directions. This does not mean that one carrier includes only two subbands. It may be understood that, in the full duplex slot, for example, in a first slot, a first carrier includes at least two subbands. At least two subbands in the first carrier have different transmission directions. For example, the first carrier includes a subband #1 and a subband #2, where transmission directions of the subband #1 and the subband #2 are different. Alternatively, the first carrier includes a subband #1, a subband #2, and a subband #3, where transmission directions of the subband #1 and the subband #3 are the same, and transmission directions of the subband #2 and the subband #1 are different.
6. RO: Is a time-frequency resource used by the terminal device for random access.
7. Preamble (preamble): Is an access sequence sent by the terminal device during random access. On one RO, a maximum of 64 preamble (preamble) sequences can be simultaneously transmitted, and the terminal device selects one preamble sequence from the 64 preamble sequences.
8. PRACH: Is a physical random access channel that carries transmission of a preamble sequence.
9. RO-SSB association: To improve performance, the network device uses different analog beams to broadcast an SSB, and the terminal measures received signal strength of the SSB in the different analog beams, and selects a best analog beam. To facilitate feedback of the selected analog beam by the terminal device, the network device binds the SSB and an RO to form an RO-SSB association. In this way, the analog beam selected by the terminal can be determined based on a position of the RO selected by the terminal device for sending a preamble sequence.
10. RO-SSB association periodicity: A minimum interval required for associating ROs corresponding to all SSBs in a synchronization signal burst set (synchronization signal burst set) to a PRACH resource is referred to as an RO-SSB association periodicity.

Based on an SBFD solution, the terminal device needs to achieve uplink synchronization using a random access procedure, to access a network for communication. Random access includes contention-based random access and non-contention-based random access. The non-contention-based access is usually performed in the case that the terminal device can successfully receive radio resource control (radio resource control, RRC) signaling.

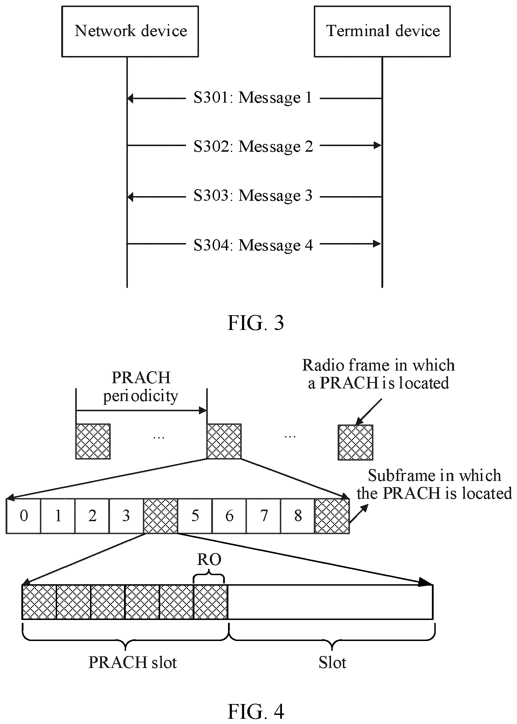

The following specifically describes the contention-based random access procedure with reference to FIG. 3.

S301: A terminal device sends a message 1 (Msg1) to a network device. Correspondingly, the network device receives the Msg1.

The terminal device randomly selects, on a PRACH resource based on a system message received from the network device and a selected SSB index, an RO from one or more ROs associated with the SSB index, to send a preamble. After determining the RO, the terminal device selects one preamble sequence from the selected RO to send. It may be understood that the preamble sequence is the Msg1.

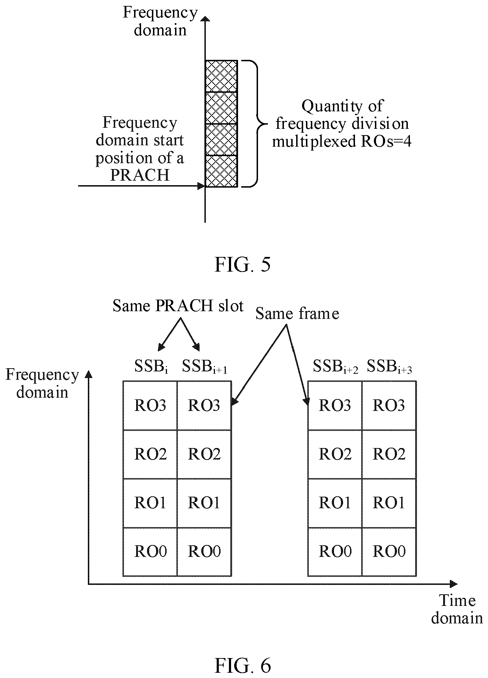

In a technology, the network device may configure a PRACH resource for the terminal device in an uplink slot via a random access channel-generic configuration RACH-ConfigGeneric information element, and the terminal device may perform random access on an RO over the PRACH resource in the uplink slot. For example, as shown in FIG. 2, a dashed line box in an uplink slot represents a PRACH resource specified by RACH-ConfigGeneric. Specifically, the terminal device may query tables 6.3.3.2-2 to 6.3.3.2-4 based on a parameter, namely, a physical random channel-configuration index prach-ConfigurationIndex in the higher layer information element RACH-ConfigGeneric sent by the network device, to obtain time domain position information of the PRACH in terms of time domain distribution, for example, a periodicity, a frame number, a subframe number, a slot number, and a quantity of ROs in a slot. For example, as shown in FIG. 4, three blocks filled with slashes at a top layer in FIG. 4 are frames in which a PRACH is located. A time domain distance between two adjacent blocks filled with slashes is a PRACH periodicity. An intermediate layer is formed by subframes of the frame in which the PRACH is located, where each block filled with slashes is a subframe in which the PRACH is located. A bottom layer is a slot structure of the subframe in which the PRACH is located, where a previous long block filled with slashes is a slot in which the PRACH is located, and may be referred to as a PRACH slot. The PRACH slot includes six small blocks filled with slashes, and each small block is one RO. That is, the PRACH slot includes six ROs. In addition, based on parameters, namely, msg1-FrequencyStart and msg1-FDM in the higher layer information element RACH-ConfigGeneric, a frequency domain start position of the PRACH and a quantity of frequency division multiplexed ROs can be obtained. In this way, a frequency domain position of the PRACH can be determined. For example, as shown in FIG. 5, a vertical direction represents a frequency domain, and each block is one RO, where msg1-FDM=4 ROs are arranged starting from a frequency domain position specified by msg1-FrequencyStart. Bandwidths of the four ROs are a bandwidth of the PRACH resource in frequency domain.

As described above, in a transmission process of the Msg1, the terminal device selects an RO based on the SSB index for transmission of a preamble sequence. Therefore, in an existing NR standard, in addition to specifying a PRACH resource position, a quantity of ROs associated with one SSB in the PRACH resource and how to associate with the RO in the PRACH resource also need to be specified. Optionally, one SSB index may be associated with one or more ROs in the PRACH resource, or a plurality of SSB indexes may be associated with one RO in the PRACH resource. Specifically, the network device may configure an association relationship between N SSBs and one RO using a higher layer parameter. When N is less than 1, one SSB is associated with 1/N ROs in the PRACH resource. When N is greater than 1, N SSBs are associated with one RO in the PRACH resource (that is, one SSB is associated with 1/N ROs). For example, when N=1/2, one SSB is associated with two ROs in the PRACH resource; or when N=2, two SSBs are associated with one RO in the PRACH resource. Therefore, when one SSB index is associated with a plurality of ROs in the PRACH resource, the terminal device selects one of the plurality of ROs, and selects a preamble sequence transmitted on the RO. After determining a quantity of ROs that need to be associated with each SSB in the PRACH resource, the terminal device may start an RO-SSB association in the PRACH resource. The RO-SSB association is first performed in frequency domain and then in time domain, first in a same slot, then in different slots, then in a same frame, and finally in different frames.

An example is used to describe how to perform an RO-SSB association on a synchronization signal burst set used by the network device in the PRACH resource in the uplink slot. For example, as shown in FIG. 6, the horizontal direction represents time domain, and the vertical direction represents frequency domain. The synchronization signal burst set used by the network device includes four SSBs: {SSBᵢ, SSBᵢ₊₁, SSBᵢ₊₂, SSBᵢ₊₃}, where i is a natural number, an SSB index of SSBᵢ is i, an SSB index of SSBi+i is i+1, and so on. msg1-FDM=4, and one SSB is associated with four ROs in the PRACH resource. The four ROs are denoted as {RO0, RO1, RO2, RO3}. A minimum time required for associating the four SSBs with 16 ROs in the PRACH resource is an RO-SSB association periodicity corresponding to the synchronization signal burst set. Specifically, as shown in FIG. 6, an RO-SSB association is performed on the four SSBs in the PRACH resource in ascending order of SSB indexes. For example, RO1 to RO4 corresponding to SSBᵢ occupy four RO positions in frequency domain that correspond to a first RO time domain position of a start PRACH slot of a same frame, RO1 to RO4 corresponding to SSBi+i occupy four RO positions in frequency domain that correspond to a second RO time domain position of the first PRACH slot of the same frame, RO1 to RO4 corresponding to SSBᵢ₊₂ occupy four RO positions in frequency domain that correspond to a first RO time domain position of a second PRACH slot of the same frame, and RO1 to RO4 corresponding to SSBᵢ₊₃ occupy four RO positions in frequency domain that correspond to a second RO time domain position of the second PRACH slot of the same frame.

S302: The network device sends a message 2 (Msg2) to the terminal device. Correspondingly, the terminal device receives the Msg2.

After receiving a preamble sequence, the network device allocates, to the terminal, a time-frequency domain resource for sending the Msg2, scheduling information of a Msg3, and the like. The Msg2 is also referred to as random access response (random access response, RAR) information. The RAR includes the scheduling information of the Msg3, that is, RAR uplink (uplink, UL) grant (grant) information.

S303: The terminal device sends the message 3 (Msg3) to the network device. Correspondingly, the network device receives the Msg3.

The Msg3 is sent on a time-frequency resource specified by the Msg2 and carried on a physical uplink shared channel (physical uplink shared channel, PUSCH).

S304: The network device sends a message 4 (Msg4) to the terminal device. Correspondingly, the terminal device receives the Msg4.

The Msg4 is mainly used for conflict resolution. When a plurality of terminal devices send a same preamble sequence on a same RO to perform random access, the network device needs to determine a terminal device to be selected for current random access. In other words, after the random access procedure ends, only one terminal device can successfully perform access.

Based on the descriptions in FIG. 3, it may be learned that, in an SBFD communication system, when a quantity of terminals is large, if a PRACH resource (referred to as a first-type PRACH resource below) configured in an uplink slot is still used to perform random access, PRACH resource contention is fierce, a random access success probability of the terminal device is greatly reduced, and random access waiting time of the terminal is long. Therefore, in a technology, the network device may further indicate, to the terminal device, a PRACH resource (referred to as a second-type PRACH resource below) on an uplink subband in an FD slot of SBFD, to reduce a PRACH resource contention degree between terminal devices, and reduce access waiting time of the terminal device.

It should be noted that, for an SBFD terminal device, both the first-type PRACH resource and the second-type PRACH resource can be used during random access, but for a non-SBFD terminal device, only the second-type PRACH resource can be used during random access.

Optionally, in this application, the non-SBFD terminal device may also be understood as a terminal device that does not support SBFD, a terminal device of an earlier version, or a legacy (legacy) terminal device.

Optionally, in this application, the SBFD terminal device may also be understood as a terminal device that supports SBFD or a terminal device of a later version.

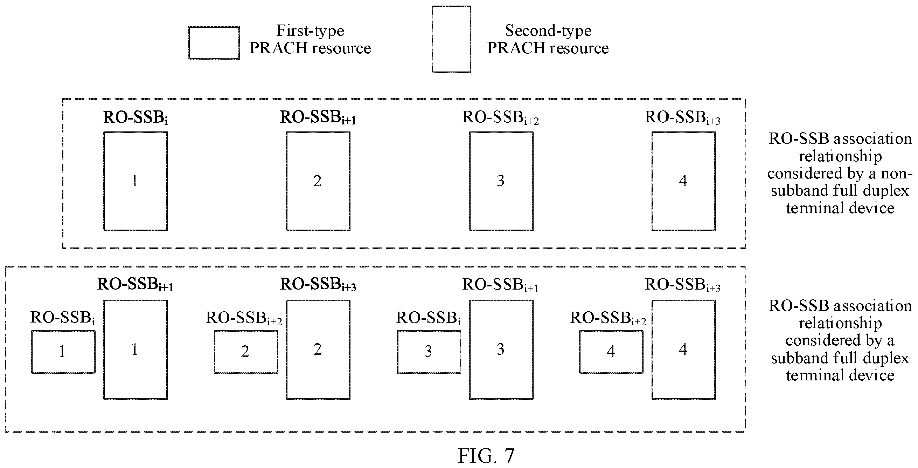

However, if association relationships between ROs in the first-type PRACH resource and the second-type PRACH resource and SSBs are still configured based on the RO-SSB association order in FIG. 6, the SBFD terminal device and the non-SBFD terminal device have inconsistent understandings of an RO-SSB association in the second-type PRACH resource, resulting in an RO-SSB association conflict. The following specifically describes the problem with reference to FIG. 7.

For example, a synchronization signal burst set used by the network device includes P=4 SSBs: {SSBᵢ, SSBi+i, SSBᵢ₊₂, SSBᵢ₊₃}, and each of the four SSBs needs to be associated with four ROs. As shown in FIG. 7, the network device indicates a first-type PRACH resource and a second type PRACH resource numbered X (1≤X≤4). A large long block represents the second-type PRACH resource, and a small long block represents the first-type PRACH resource. The first-type PRACH resource or the second-type PRACH resource numbered X (1≤X≤4) includes four ROs. For a non-SBFD terminal device, only the second-type PRACH resource can be used. The four SSBs are associated with ROs in the second-type PRACH resource in ascending order of SSB indexes. Specifically, as shown in FIG. 7, SSBi+x-i is associated with the four ROs in the second-type PRACH resource numbered X. For an SBFD terminal device, because both the second-type PRACH resource and the first-type PRACH resource can be used, the four SSBs are still associated with ROs in the first-type PRACH resource and the second-type PRACH resource in ascending order of the SSB indexes. Specifically, as shown in FIG. 7, SSBᵢ is associated with four ROs in a first-type PRACH resource numbered 1, SSBi+i is associated with four ROs in a second-type PRACH resource numbered 1, SSBᵢ₊₂ is associated with four ROs in a first-type PRACH resource numbered 2, and SSBᵢ₊₃ is associated with four ROs in a second-type PRACH resource numbered 2. The rest may be deduced by analogy. Details are not described again. It can be learned from FIG. 7 that, in RO-SSB association relationships considered by the SBFD terminal device and the non-SBFD terminal device, SSBs associated with second-type PRACH resources numbered 1, 2, and 3 are inconsistent. In other words, the SBFD terminal device and the non-SBFD terminal device have inconsistent understandings of an RO-SSB association in the second-type PRACH resource, resulting in a conflict. Therefore, after the second-type PRACH resource in the SBFD system is introduced, how to perform random access is an urgent problem to be resolved.

In view of this, this application provides a communication method, to resolve the foregoing problem. The following describes in detail the method provided in this application.

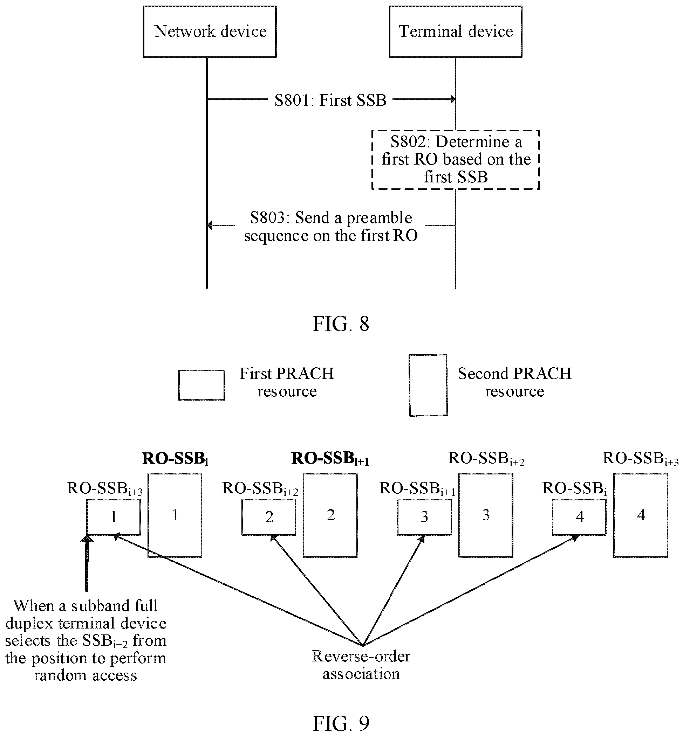

FIG. 8 is a schematic flowchart of a communication method according to this application. The method may include the following operations. It should be noted that steps indicated by dashed lines in FIG. 8 are optional, and are not described in detail below.

S801: A network device sends a first SSB to a terminal device.

Correspondingly, the terminal device receives the first SSB from the network device. The first SSB is one of P SSBs, the P SSBs belong to a same synchronization signal burst set, and P is an integer greater than 1.

S802: The terminal device determines a first RO based on the first SSB. The first RO is one or more ROs associated with the first SSB in a first PRACH resource or a second PRACH resource.

In this application, the P SSBs are associated with ROs in the first PRACH resource in a first SSB index order, the P SSBs are associated with ROs in the second PRACH resource in a second SSB index order, and the first SSB index order is different from the second SSB index order. Specifically, the P SSBs are {SSBᵢ, SSBi+i, SSBᵢ₊₂, ..., SSBᵢ₊ₚ₋₁}, and i is a natural number, where an SSB index of SSBᵢ is i, an SSB index of SSBi+i is i+1, ..., and an SSB index of SSBᵢ₊ₚ₋₁ is i+p-1.

Optionally, the first PRACH resource is a PRACH resource that can be used by an SBFD terminal device during random access but cannot be used by a non-SBFD terminal device, and the second PRACH resource is a PRACH resource that can be used by both the SBFD terminal device and the non-SBFD terminal device.

For ease of understanding, in all embodiments of this application, an example in which the first PRACH resource is the foregoing first-type PRACH resource and the second PRACH resource is the foregoing second-type PRACH resource is used for description.

In this case, the first SSB index order corresponding to the first PRACH resource is different from the second SSB index order corresponding to the second PRACH resource. The following several implementations may be used.

Manner 1: The second SSB index order is an ascending order of SSB indexes, and the first SSB index order is a descending order of the SSB indexes (referred to as a reverse-order association for short in the following).

With reference to FIG. 9, the following specifically describes how the P SSBs are associated with the ROs in the first PRACH resource and the second PRACH resource based on the orders. For example, a synchronization signal burst set used by the network device includes P=4 SSBs. The four SSBs are {SSBᵢ, SSBi+i, SSBᵢ₊₂, SSBᵢ₊₃}, and each of the four SSBs needs to be associated with four ROs in the first PRACH resource or the second PRACH resource. As shown in FIG. 9, a large long block represents the second PRACH resource, and a small long block represents the first PRACH resource. A first PRACH resource or a second PRACH resource numbered X (1≤X≤4) includes four ROs. An RO-SSB association order of the P SSBs in the second PRACH resource is SSBᵢ, SSBᵢ₊₁, SSBᵢ₊₂, and SSBᵢ₊₃, and an RO-SSB association order of the P SSBs in the first PRACH resource is SSBᵢ₊₃, SSBᵢ₊₂, SSBᵢ₊₁, and SSBᵢ. Specifically, SSBᵢ is associated with four ROs in a second PRACH resource numbered 1, SSBi+i is associated with four ROs in a first PRACH resource numbered 2, SSBᵢ₊₂ is associated with four ROs in a first PRACH resource numbered 3, and SSBᵢ₊₃ is associated with four ROs in a first PRACH resource numbered 4. In addition, SSBᵢ₊₃ is associated with four ROs in a first PRACH resource numbered 1, SSBᵢ₊₂ is associated with four ROs in the first PRACH resource numbered 2, SSBi+i is associated with four ROs in the first PRACH resource numbered 3, and SSBᵢ is associated with four ROs in the first PRACH resource numbered 4.

With reference to FIG. 9, how the terminal device selects, from the first PRACH resource and the second PRACH resource after receiving an SSB, an RO associated with the SSB is briefly described herein. For example, when the SBFD terminal device selects SSBᵢ₊₂ at a time domain start position of the first PRACH resource numbered 1 to perform access, because ROs in the first PRACH resource and the second PRACH resource numbered 1 are associated with another SSB, the terminal device needs to wait until a moment of a time domain position of the first PRACH resource numbered 2, and then may send a preamble sequence on an RO associated with SSBᵢ₊₂ in the PRACH resource to perform random access. It can be learned that, for the SBFD terminal device, if there is no first PRACH resource, a preamble sequence can be sent only on the second PRACH resource numbered 3 to perform random access. However, because the first PRACH resource is introduced in this application, time for the SBFD terminal device to perform random access over the PRACH resource is reduced to some extent, and PRACH resource contention between terminal devices is also reduced.

It should be understood that, in the manner 1 to a manner 3 in this application, a limited quantity of numbered first PRACH resources and second PRACH resources are merely provided as an example. During practice, there may be more first PRACH resources or second PRACH resources.

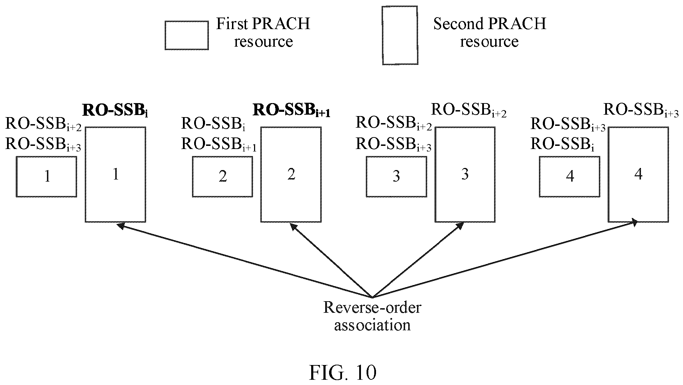

It should be further understood that, in FIG. 9, the reverse-order association is described by using an example in which the first PRACH resource or the second PRACH resource numbered X (1≤X≤4) can be associated with only four ROs corresponding to one SSB. The following describes, with reference to FIG. 10, a possible reverse-order association manner when one PRACH resource can be associated with a plurality of SSBs.

As shown in FIG. 10, an RO-SSB order of four SSBs in a second PRACH resource remains as the RO-SSB order in FIG. 9, and a second PRACH resource numbered X (1≤X≤4) can be associated with only four ROs corresponding to one SSB. Details are not described herein again. A difference from FIG. 9 is mainly described herein. It can be learned that a first PRACH resource numbered X (1≤X≤4) includes eight ROs, and the four SSBs in FIG. 10 are still associated with ROs in the second PRACH resource in descending order of SSB indexes (that is, the second SSB index order). Differences are that SSBᵢ₊₃ and SSBᵢ₊₂ each are associated with four ROs in a first PRACH resource numbered 1, SSBi+i and SSBᵢ each are associated with four ROs in a first PRACH resource numbered 2, SSBᵢ₊₃ and SSBᵢ₊₂ each are associated with four ROs in a first PRACH resource numbered 3, and SSBi+i and SSBᵢ each are associated with four ROs in a first PRACH resource numbered 4.

It should be noted that, although both SSBᵢ₊₃ and SSBᵢ₊₂ need to be associated with four ROs in the first PRACH resource numbered 1, an association still needs to be performed in descending order of the SSB indexes. To be specific, SSBᵢ₊₃ is preferentially associated with four ROs in the first PRACH resource numbered 1, and then SSBᵢ₊₂ is associated with four ROs in remaining resources of the first PRACH resource numbered 1. A mapping order of the two SSBs in another PRACH resource with a same number is the same as that described above. Details are not described herein again.

It should be further noted that, in this application, any one of the P SSBs is associated with ROs in a first PRACH or a second PRACH resource with any number is first in frequency domain and then in time domain, first in a same slot, then in different slots, then in a same frame, and finally in different frames. Specifically, for a process in which an RO-SSB association is performed on one SSB in the PRACH resource, refer to the descriptions in FIG. 6. Details are not described herein again.

Manner 2: The second SSB index order is an ascending order of SSB indexes, and the first SSB index order is first descending order of odd SSB indexes and then descending order of even SSB indexes.

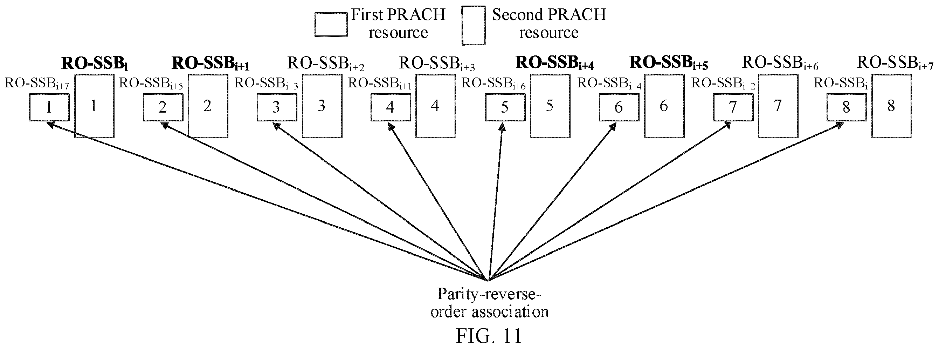

With reference to FIG. 11, the following specifically describes how the P SSBs are associated with the ROs in the first PRACH resource and the second PRACH resource based on the orders. For example, a synchronization signal burst set used by the network device includes P=8 SSBs: {SSBᵢ, SSBi+i, SSBᵢ₊₂, SSBᵢ₊₃, SSBᵢ₊₄, SSBᵢ₊₅, SSBᵢ₊₆, SSBᵢ₊₇}, and each of the eight SSBs needs to be associated with four ROs in the first PRACH resource or the second PRACH resource, where a first PRACH resource or a second PRACH resource numbered X (1≤X≤8) includes four ROs. As shown in FIG. 11, a large long block represents the second PRACH resource, and a small long block represents the first PRACH resource. An RO-SSB association order of the P SSBs in the second PRACH resource is SSB;, SSBi+i, SSBᵢ₊₂, SSBᵢ₊₃, SSBᵢ₊₄, SSBᵢ₊₅, SSBᵢ₊₆, and SSBᵢ₊₇. An RO-SSB association order of the P SSBs in the first PRACH resource is SSBᵢ₊₇, SSBᵢ₊₅, SSBᵢ₊₃, SSBi+i, SSBᵢ₊₆, SSBᵢ₊₄, SSBᵢ₊₂, and SSBᵢ (where the order is used as an example in FIG. 11). Alternatively, an RO-SSB association order of the P SSBs in the first PRACH resource is SSBᵢ₊₆, SSBᵢ₊₄, SSBᵢ₊₂, SSB;, SSBᵢ₊₇, SSBᵢ₊₅, SSBᵢ₊₃, and SSBi+i. Specifically, an SSBi+x-i is associated with four ROs in the second PRACH resource numbered X. SSBᵢ₊₇ is associated with four ROs in a first PRACH resource numbered 1, SSB;+s is associated with four ROs in a first PRACH resource numbered 2, SSBᵢ₊₃ is associated with four ROs in a second PRACH resource numbered 3, SSBi+i is associated with four ROs in a second PRACH resource numbered 4 SSBᵢ₊₆ is associated with four ROs in a second PRACH resource numbered 5, SSBᵢ₊₄ is associated with four ROs in a second PRACH resource numbered 6, SSBᵢ₊₂ is associated with four ROs in a second PRACH resource numbered 7, and SSBᵢ is associated with four ROs in a second PRACH resource numbered 8.

Manner 3: The second SSB index order is an ascending order of SSB indexes, and the first SSB index order is determined based on the second SSB index order.

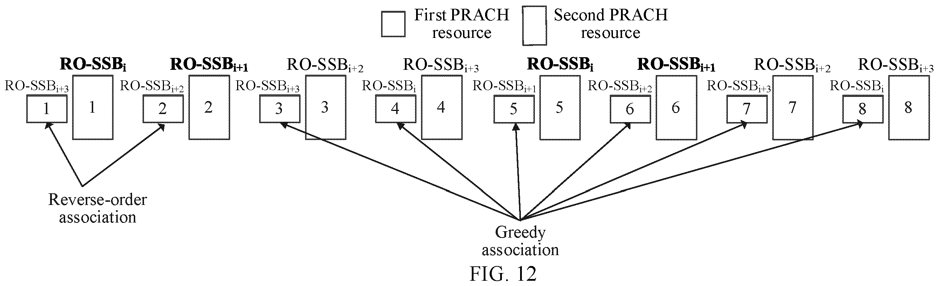

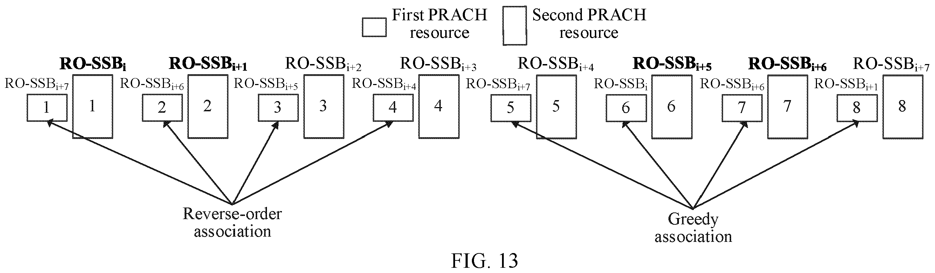

In a possible implementation, the first SSB index order is determined based on the second SSB index order and a greedy algorithm (referred to as a greedy association for short in the following). With reference to FIG. 12 and FIG. 13, the following specifically describes how the P SSBs are associated with the ROs in the first PRACH resource and the second PRACH resource based on the orders.

For example, a synchronization signal burst set used by the network device includes P=4 SSBs. The four SSBs are {SSBᵢ, SSBi+i, SSBᵢ₊₂, SSBᵢ₊₃}, and each of the four SSBs needs to be associated with four ROs in the first PRACH resource or the second PRACH resource, where a first PRACH resource or a second PRACH resource numbered X (1≤X≤8) includes four ROs. As shown in FIG. 12, a large long block represents the second PRACH resource, and a small long block represents the first PRACH resource. An RO-SSB association order of the P SSBs in the second PRACH resource is SSBᵢ, SSBi+i, SSBᵢ₊₂, SSBᵢ₊₃, SSBᵢ, SSBi+i, SSBᵢ₊₂, and SSBᵢ₊₃. Specifically, SSBᵢ is associated with four ROs in a second PRACH resource numbered 1 and a second PRACH resource numbered 5, SSBi+i is associated with four ROs in a second PRACH resource numbered 2 and a second PRACH resource numbered 6, SSBᵢ₊₂ is associated with four ROs in a second PRACH resource numbered 3 and a second PRACH resource numbered 7, and SSBᵢ₊₃ is associated with four ROs in a second PRACH resource numbered 4 and a second PRACH resource numbered 8. Because the second PRACH resource numbered 1 and the second PRACH resource numbered 2 are respectively associated with the ROs corresponding to SSBᵢ and the ROs corresponding to SSBi+i, to form an RO-SSB association periodicity as soon as possible, in a reverse-order association manner, a first PRACH resource numbered 1 is associated with four ROs corresponding to SSBᵢ₊₃, and a first PRACH resource numbered 2 is associated with four ROs corresponding to SSBᵢ₊₂. Then, in first PRACH resources numbered 3 to 8, SSBs need to be associated in a greedy manner of minimizing an RO-SSB association periodicity based on an SSB association status in a previous RO-SSB periodicity. Finally, it may be determined that the first PRACH resources numbered 3 to 8 are associated with ROs corresponding to the SSBs in an order of SSBᵢ₊₃, SSBᵢ, SSBi+i, SSBᵢ₊₂, SSBᵢ₊₃ and SSBᵢ.

The following specifically describes how to determine the association order of SSBᵢ₊₃, SSBᵢ, SSBi+i, and SSBᵢ₊₂.

First, an SSB to be associated with the first PRACH resource numbered 3 is determined. A specific operation is as follows: SSBs associated with PRACH resources before the first PRACH resource numbered 3 are continuously recorded until all of the four SSBs are included. It can be learned that, starting from the second PRACH resource numbered 2 to the first PRACH resource numbered 1, these PRACH resources are associated with all of the four SSBs for a first time. In this case, the SSB to be associated with the first PRACH resource numbered 3 is the same as the SSB to be associated with the first PRACH resource numbered 1. That is, the first PRACH resource numbered 3 needs to be associated with four ROs corresponding to SSBᵢ₊₃.

Then, an SSB to be associated with the first PRACH resource numbered 4 is determined. A specific operation is as follows: SSBs associated with PRACH resources before the first PRACH resource numbered 4 are continuously recorded until all of the four SSBs are included. It can be learned that, starting from the second PRACH resource numbered 3 to the second PRACH resource numbered 1, these PRACH resources are associated with all of the four SSBs for a first time. In this case, the SSB to be associated with the first PRACH resource numbered 4 is the same as the SSB to be associated with the second PRACH resource numbered 1. That is, the first PRACH resource numbered 4 needs to be associated with four ROs corresponding to SSB;.

An SSB to be associated with the first PRACH resource numbered 5 continues to be determined. A specific operation is as follows: SSBs associated with PRACH resource before the first PRACH resource numbered 5 are continuously recorded until all of the four SSBs are included. It can be learned that, starting from the second PRACH resource numbered 4 to the second PRACH resource numbered 2, these PRACH resources are associated with all of the four SSBs for a first time. In this case, the SSB to be associated with the first PRACH resource numbered 5 is the same as the SSB to be associated with the second PRACH resource numbered 2. That is, the first PRACH resource numbered 5 needs to be associated with four ROs corresponding to SSBi+i.

According to the foregoing derivation method, the first PRACH resource numbered 6 needs to be associated with four ROs corresponding to SSBᵢ₊₂, the first PRACH resource numbered 7 needs to be associated with four ROs corresponding to SSBᵢ₊₃, and the first PRACH resource numbered 8 needs to be associated with four ROs corresponding to SSB;. A specific derivation process is not described herein again.

For another example, a synchronization signal burst set used by the network device includes P=8 SSBs: {SSBᵢ, SSBi+i, SSBᵢ₊₂, SSBᵢ₊₃, SSBᵢ₊₄, SSBᵢ₊₅, SSBᵢ₊₆, SSBᵢ₊₇}. Each of the eight SSBs needs to be associated with four ROs in the first PRACH resource or the second PRACH resource, where a first PRACH resource or a second PRACH resource numbered X (1≤X≤8) includes four ROs. As shown in FIG. 13, a large long block represents the second PRACH resource, and a small long block represents the first PRACH resource. An RO-SSB association order of the P SSBs in the second PRACH resource is SSB;, SSBi+i, SSBᵢ₊₂, SSBᵢ₊₃, SSBᵢ₊₄, SSBᵢ₊₅, SSBᵢ₊₆, and SSBᵢ₊₇. Specifically, SSB_{i+X-1} is associated with four ROs in the second PRACH resource numbered X. Because second PRACH resources numbered 1 to 4 are respectively associated with ROs corresponding to SSB;, SSBi+i, SSBᵢ₊₂, and SSBᵢ₊₃, to form an RO-SSB association periodicity as soon as possible, in a reverse-order association manner, a first PRACH resource numbered 1 is associated with four ROs corresponding to SSBᵢ₊₇, a first PRACH resource numbered 2 is associated with four ROs corresponding to SSBᵢ₊₆, a first PRACH resource numbered 3 is associated with four ROs corresponding to SSBᵢ₊₅, and a first PRACH resource numbered 4 is associated with four ROs corresponding to SSBᵢ₊₄. Then, in first PRACH resources numbered 5 to 8, SSBs need to be associated in a greedy manner of minimizing an RO-SSB association periodicity based on an SSB association status in a previous RO-SSB periodicity. It may be determined that the first PRACH resources numbered 5 to 8 are associated with ROs corresponding to the SSBs in an order of SSBᵢ₊₇, SSBᵢ, SSBᵢ₊₆, and SSBi+i.

The following specifically describes how to determine the association order of SSBᵢ₊₇, SSBᵢ, SSBᵢ₊₆, and SSBi+i.

First, an RO corresponding to an SSB to be associated with the first PRACH resource numbered 5 is determined. A specific operation is as follows: SSBs associated with PRACH resources before the first PRACH resource numbered 5 are continuously recorded until all of the eight SSBs are included. It can be learned that, starting from the second PRACH resource numbered 4 to the first PRACH resource numbered 1, these PRACH resources are associated with all of the eight SSBs for a first time. In this case, the SSB to be associated with the first PRACH resource numbered 5 is the same as the SSB to be associated with the first PRACH resource numbered 1. That is, the first PRACH resource numbered 5 needs to be associated with four ROs corresponding to SSBᵢ₊₇.

Then, an RO corresponding to an SSB to be associated with the first PRACH resource numbered 6 is determined. A specific operation is as follows: SSBs associated with PRACH resources before the first PRACH resource numbered 6 are continuously recorded until all of the eight SSBs are included. It can be learned that, starting from the second PRACH resource numbered 5 to the second PRACH resource numbered 1, these PRACH resources are associated with all of the eight SSBs for a first time. In this case, the SSB to be associated with the first PRACH resource numbered 6 is the same as the SSB to be associated with the second PRACH resource numbered 1. That is, the first PRACH resource numbered 6 needs to be associated with four ROs corresponding to SSB;.

An RO corresponding to an SSB associated with the first PRACH resource numbered 7 continues to be determined. A specific operation is as follows: SSBs associated with PRACH resources before the first PRACH resource numbered 7 are continuously recorded until all of the eight SSBs are included. It can be learned that, starting from the second PRACH resource numbered 6 to the first PRACH resource numbered 2, these PRACH resources are associated with all of the eight SSBs for a first time. In this case, the SSB to be associated with the first PRACH resource numbered 7 is the same as the SSB to be associated with the first PRACH resource numbered 2. That is, the first PRACH resource numbered 7 needs to be associated with four ROs corresponding to SSBᵢ₊₆.

According to the foregoing derivation method, the first PRACH resource numbered 8 needs to be associated with four ROs corresponding to SSBi+i. A specific derivation process is not described herein again.

It can be learned that, in the foregoing several RO-SSB association manners, the first PRACH resource and the second PRACH resource are considered as two different PRACH resources. RO associations on the SSB in the synchronization signal burst set in the first PRACH resource and the second PRACH resource are performed in different SSB index orders. The RO association of the SSB in the first PRACH resource does not affect a previous RO association of the SSB in the second PRACH resource. To be specific, this solution does not cause the non-SBFD terminal device and the SBFD terminal device to have different understandings of an RO-SSB association relationship on the second PRACH resource. Therefore, the non-SBFD terminal device and the SBFD terminal device can better coexist.

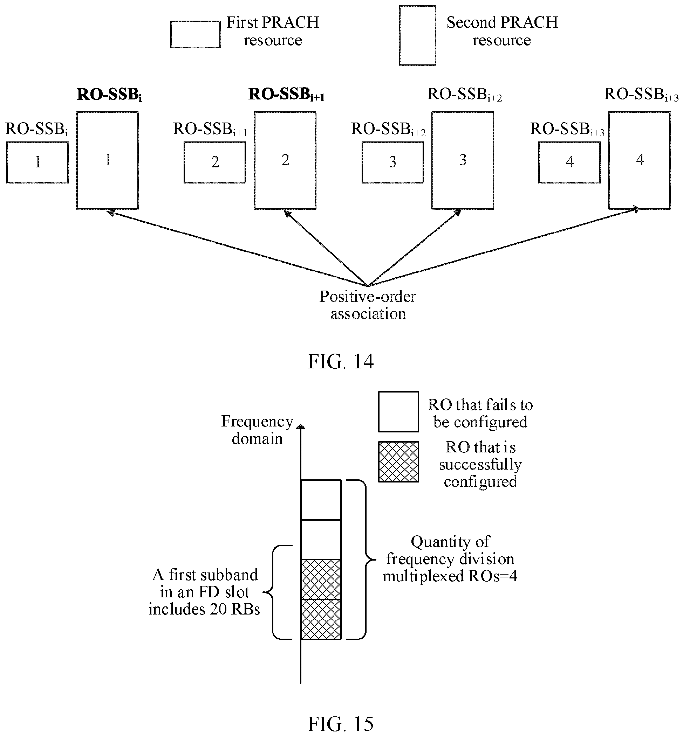

In a technology, the first SSB index order corresponding to the first PRACH resource may alternatively be the same as the second SSB index order corresponding to the second PRACH resource (referred to as a positive-order association for short in the following). For example, both the second SSB index order and the second SSB index order are the ascending order of the SSB indexes. With reference to FIG. 14, the following specifically describes how the P SSBs correspond to the ROs in the first PRACH resource and the second PRACH resource based on the orders. For example, a synchronization signal burst set used by the network device includes P=4 SSBs. The four SSBs are {SSBᵢ, SSBi+i, SSBᵢ₊₂, SSBᵢ₊₃}, and each of the four SSBs needs to be associated with four ROs in the first PRACH resource or the second PRACH resource. As shown in FIG. 14, a large long block represents the second PRACH resource, and a small long block represents the first PRACH resource. A first PRACH resource or a second PRACH resource numbered X (1≤X≤4) includes four ROs. An RO-SSB association order of the P SSBs in the second PRACH resource is SSBᵢ, SSBi+i, SSBᵢ₊₂, and SSBᵢ₊₃, and an RO-SSB association order of the P SSBs in the first PRACH resource is also SSB;, SSBi+i, SSBᵢ₊₂, and SSBᵢ₊₃. Specifically, an SSB_{i+X-1} is associated with four ROs in the second PRACH resource numbered X, and SSB_{i+X-1} is associated with four ROs in the first PRACH resource numbered X.

Compared with the positive-order mapping, in the several association orders provided in this application, the RO-SSB association periodicity of the synchronization signal burst set used by the network device is reduced. Therefore, average waiting time of the SBFD terminal device from receiving the first SSB to using the first SSB to be associated with the RO in the PRACH resource is also reduced, so that an access delay of the SBFD terminal device is reduced.

The following describes the beneficial effects in detail with reference to the association order provided in this application. It can be learned that, in a case of the positive-order association, in FIG. 14, counting from a time domain start position of a first PRACH resource with any number from 1 to 4, an RO-SSB association periodicity is seven SSBs based on a quantity of associated SSBs, and counting from a time domain start position of a second PRACH with any number from 1 to 4, an RO-SSB association periodicity is six SSBs based on a quantity of associated SSBs. In other words, the RO-SSB association periodicities of 7 and 6 repeat in this order. However, in the reverse-order association (the order in the manner 1) corresponding to FIG. 9, counting from a time domain start position of the first PRACH numbered 1, an RO-SSB association periodicity is four SSBs based on a quantity of associated SSBs, counting from a time domain start position of the second PRACH numbered 1, an RO-SSB association periodicity is seven SSBs based on a quantity of associated SSBs, counting from a time domain start position of the first PRACH numbered 2, an RO-SSB association periodicity is six SSBs based on a quantity of associated SSBs, counting from a time domain start position of the second PRACH numbered 2, an RO-SSB association periodicity is five SSBs based on a quantity of associated SSBs, and counting from a time domain start position of the first PRACH numbered 3, an RO-SSB association periodicity is four SSBs based on a quantity of associated SSBs. By analogy, it can be learned that, in the reverse-order association manner, the RO-SSB association periodicities of 4, 7, 6, and 5 repeat. On average, the RO-SSB association periodicity in the reverse-order association corresponding to FIG. 9 is shorter than the RO-SSB association periodicity in the positive-order association manner. That is, average random access waiting time of the SBFD terminal device is reduced. Similarly, for the greedy association shown in FIG. 12, counting from a time domain start position of the first PRACH resource numbered 1, an RO-SSB association periodicity is four SSBs based on a quantity of associated SSBs, and counting from a time domain start position of the first PRACH numbered 2, after that, RO-SSB association periodicities of 4 and 5 repeat. That is, the RO-SSB association periodicity in the greedy association is 4, 4, 5, 4, 5, 4, 5, .... In general, from a perspective of an average periodicity, the RO-SSB association periodicity in the greedy association is shorter than the RO-SSB association periodicity in the reverse-order association manner. That is, average random access waiting time of the SBFD terminal device is reduced.

S803: The terminal device sends a preamble sequence to the network device on the first RO. Correspondingly, the network device receives the preamble sequence from the terminal device on the first RO.

The foregoing describes in detail the RO-SSB association between the first PRACH resource and the second PRACH resource. The terminal device can determine, in the foregoing association manner, ROs, in the first PRACH resource and/or the second PRACH resource, with which the SSBs in the synchronization signal burst set are associated, to determine the first RO.

However, it should be noted that, before the terminal device determines the first RO, the terminal device further needs to learn of ROs in specific PRACH resources for sending the preamble sequence. Therefore, the network device further needs to indicate time-frequency positions of the first PRACH resource and the second PRACH resource to the terminal device, so that the terminal device can perform an RO-SSB association in the indicated PRACH resource, to determine the first RO. In view of this, the following continues to describe in detail how the network device indicates the time-frequency positions of the first PRACH resource and the second PRACH resource. For example, the following provides two possible indication manners.

### Implementation 1

How to indicate the time domain position of the first PRACH resource is not limited in this implementation.

In a technology, a quantity of frequency division multiplexed ROs in the second PRACH resource on a first carrier may be configured by the network device. For example, the network device may indicate, via a parameter msg1-FDM in a higher layer information element RACH-ConfigGeneric, the quantity of frequency division multiplexed ROs in the second PRACH resource on the first carrier. In this implementation, the SBFD terminal device may reuse the frequency domain configuration information, and re-interpret the frequency domain configuration information, to determine a configuration of the first PRACH resource in frequency domain. Specifically, an example in which the quantity of frequency division multiplexed ROs in the second PRACH resource is M is used for description, where M is a positive integer. In this case, a quantity of frequency division multiplexed ROs in the first PRACH resource on a first subband that is in the first carrier and that is used for uplink transmission is N, where N is a positive integer less than or equal to M, and bandwidths of the N ROs is less than or equal to a bandwidth of the first subband. In this way, the terminal device may determine a frequency domain position of the first PRACH resource with reference to a frequency domain start position or end position of the first PRACH resource.

Optionally, the frequency domain start position of the first PRACH resource may be a first RB of the first subband, or the frequency domain end position of the first PRACH resource may be a last RB of the first subband. An advantage of this regulation is that continuous resources may be reserved in frequency domain for sending other data without damaging resource continuity. In addition, a frequency domain resource of the first subband may be fully utilized, that is, the use of the first PRACH resource is maximized, so that the SBFD terminal device can use more PRACH resources during random access.

Optionally, the terminal device may determine the quantity N of frequency division multiplexed ROs in the first PRACH resource on the first subband in the first carrier, and the determining process may include the following operations.

Step 1: The terminal device determines that the quantity of frequency division multiplexed ROs in the second PRACH resource on the first carrier is M, where M is a positive integer.

Before step 1, the method further includes: The terminal device receives first information from the network device, where the first information indicates that the quantity of frequency division multiplexed ROs in the second PRACH resource is M.

Step 2: The terminal device determines that the quantity of frequency division multiplexed ROs in the first PRACH resource on the first subband that is in the first carrier and that is used for uplink transmission is N, where N is a positive integer less than or equal to M, and the bandwidths of the N ROs is less than or equal to the bandwidth of the first subband.

Optionally, a value of N may be determined based on the following conditions. When the bandwidth of the first subband is greater than or equal to bandwidths of the M ROs, the terminal device determines that the quantity of frequency division multiplexed ROs in the first PRACH resource on the first subband that is in the first carrier and that is used for uplink transmission is M; or when the bandwidth of the first subband is less than bandwidths of the M ROs, the terminal device determines that the quantity of frequency division multiplexed ROs in the first PRACH resource on the first subband that is in the first carrier and that is used for uplink transmission is N, where N is an integer that is in 1, 2, 4, and 8 and that enables the first PRACH resource to occupy a maximum bandwidth on the first subband. For example, as shown in FIG. 15, the quantity of frequency division multiplexed ROs in the second PRACH resource on the first carrier is 4, and each RO includes 6 RBs. There is a first PRACH resource in one FD slot. A first subband in a first carrier in the FD slot includes 20 RBs, and RB numbers are from 0 to 19. In this case, the terminal device starts to configure the first PRACH resource located in the FD slot from the RB 0 in the first subband. Because a bandwidth of the first subband is less than bandwidths of 24 RBs required for configuring four ROs, the terminal device determines, according to the foregoing rule, that a quantity of frequency division multiplexed ROs in the first PRACH resource on the first subband in the first carrier is 2.

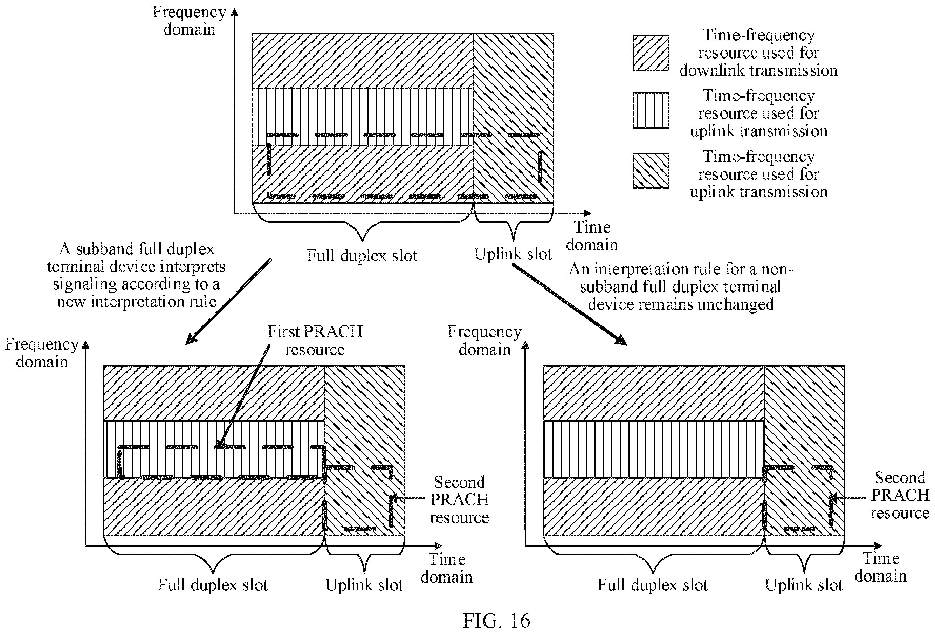

In a specific implementation, as shown in a diagram of a first layer in FIG. 16, the network device may indicate both time domain position information of the first PRACH resource and time domain position information of the second PRACH resource via a parameter prach-ConfigurationIndex of a higher layer information element RACH-ConfigGeneric. That is, the network device no longer adds new signaling, and may reuse the parameter prach-ConfigurationIndex to indicate a time domain position of the first PRACH resource. The higher layer information element RACH-ConfigGeneric further includes parameters msg1-FrequencyStart and msg1-FDM, and the parameters msg1-FrequencyStart and msg1-FDM respectively indicate a start position of the second PRACH resource on a first carrier and a quantity of frequency division multiplexed ROs. A diagram on the left of a second layer in FIG. 16 is a diagram of determining, by the SBFD terminal device, the first PRACH resource and the second PRACH resource based on the provided parameters. It can be learned that the SBFD terminal device determines the time domain position of the first PRACH resource based on the parameter prach-ConfigurationIndex. In addition, a quantity of frequency division multiplexed ROs in the second PRACH resource on an uplink subband in the first carrier may be determined by interpreting the parameter msg1-FDM based on the foregoing new interpretation rule. In the diagram on the left of the second layer in FIG. 16, an example in which the frequency domain start position of the first PRACH resource is a first RB of the uplink subband in the first carrier is used. In this case, the SBFD terminal device determines a time-frequency position of the first PRACH resource. For determining, by the SBFD terminal device, a time-frequency position of the second PRACH resource, refer to the descriptions in this specification. Details are not described again. A diagram on the right of the second layer in FIG. 16 is a diagram of determining, by the non-SBFD terminal device, the second PRACH resource based on the provided parameters. It can be learned that because the non-SBFD terminal device cannot use the first PRACH resource in the FD slot, the non-SBFD terminal device can determine only the second PRACH resource. For determining, by the non-SBFD terminal device, a time-frequency position of the second PRACH resource, refer to the descriptions in this specification. Details are not described herein again.

In the implementation 1, without increasing signaling overheads, a rule for interpreting existing signaling by the SBFD terminal device is predefined, so that the first PRACH resource is configured in frequency domain. In addition, because the network device indicates the first PRACH resource in this implementation, both the first PRACH resource and the second PRACH resource can be used by the terminal device for random access. This reduces random access failures caused by strained PRACH resources, and reduces a random access delay of the terminal device.

### Implementation 2

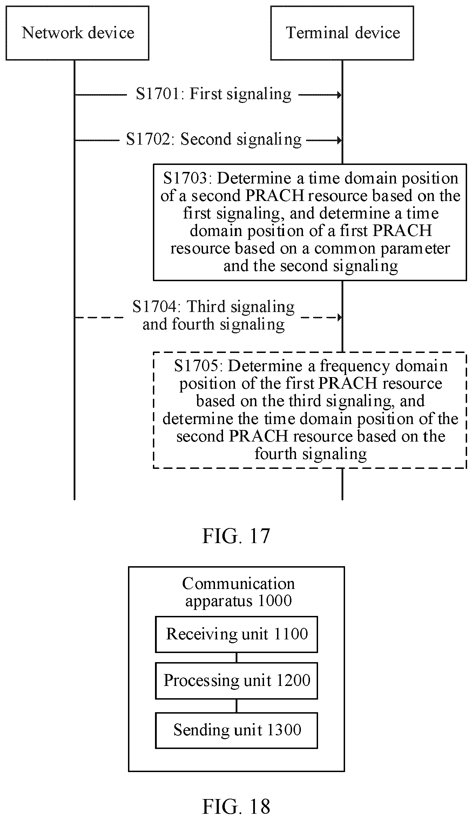

For ease of understanding, this implementation is described with reference to FIG. 17. This implementation may include the following operations. It should be noted that steps indicated by dashed lines in FIG. 17 are optional, and are not described in detail below.

S1701: The network device sends first signaling to the terminal device, where the first signaling includes second information and position information of the second PRACH resource in one PRACH periodicity, and the second information includes a common parameter used to determine time domain position information of the first PRACH resource and time domain position information of the second PRACH resource. Correspondingly, the terminal device receives the first signaling from the network device.

Optionally, the common parameter includes one or more of the following parameters: a PRACH periodicity, a preamble configuration, and a quantity and positions of ROs in one PRACH slot.

S1702: The network device sends second signaling to the terminal device, where the second signaling includes information indicating a position of the first PRACH resource in one PRACH periodicity. Correspondingly, the terminal device receives the second signaling from the network device.

S1703: The terminal device determines a time domain position of the second PRACH resource based on the first signaling, and the terminal device determines a time domain position of the first PRACH resource based on the common parameter and the second signaling.

Optionally, the implementation further includes the following operations.

S1704: The network device sends third signaling and fourth signaling to the terminal device, where the third signaling indicates position information of the first PRACH resource in frequency domain, and the fourth signaling indicates position information of the second PRACH resource in frequency domain.

Correspondingly, the terminal device receives the third signaling and the fourth signaling from the network device.

S1705: The terminal device determines a frequency domain position of the first PRACH resource based on the third signaling, and the terminal device determines the time domain position of the second PRACH resource based on the fourth signaling.

Optionally, the plurality of pieces of signaling may be jointly indicated, or may be separately indicated. This is not specifically limited in this application.

In a specific implementation, the first signaling, the second signaling, the third signaling, and the fourth signaling may all be included in a higher layer information element RACH-ConfigGeneric. The first signaling is a parameter prach-ConfigurationIndex. The terminal device may query tables 6.3.3.2-2 to 6.3.3.2-4 based on the parameter to obtain time domain position information of the second PRACH resource in terms of time domain distribution, for example, a periodicity, a frame number, a subframe number, a slot number, and a quantity of ROs in a slot. In other words, the terminal device may determine the time domain position of the second PRACH resource based on the parameter. In addition, the terminal device may further determine the time domain position of the first PRACH resource based on a common parameter of a time domain configuration in the prach-ConfigurationIndex and the position information that is of the first PRACH resource in one PRACH periodicity and that is indicated in the second signaling. The third signaling may include parameters msg1-FrequencyStart and msg1-FDM. The parameters msg1-FrequencyStart and msg1-FDM respectively indicate a frequency domain start position of the second PRACH resource and a quantity of frequency division multiplexed ROs. The terminal device may determine the frequency domain position of the second PRACH resource based on the third signaling. The fourth signaling may indicate a frequency domain start position of the first PRACH resource and a quantity of frequency division multiplexed ROs. The terminal device may determine the frequency domain position of the second PRACH resource based on the fourth signaling.

In the implementation 2, the first PRACH resource is flexibly configured by adding new signaling. In addition, because the network device indicates the first PRACH resource in this implementation, both the first PRACH resource and the second PRACH resource can be used by the terminal device for random access. This reduces random access failures caused by strained PRACH resources, and reduces a random access delay of the terminal device.

The foregoing describes in detail the communication method provided in this application. The following describes a communication apparatus provided in this application.

FIG. 18 is a schematic block diagram of a communication apparatus 1000 according to this application.

In a possible design, the communication apparatus 1000 includes a receiving unit 1100 and a sending unit 1300. The communication apparatus 1000 may implement steps or procedures performed by the terminal device corresponding to the foregoing method embodiments. For example, the communication apparatus 1000 may be a terminal device, or may be a chip or a circuit disposed in a terminal device. The receiving unit 1100 is configured to perform a receiving-related operation of the terminal device in the foregoing method embodiments, and the sending unit 1300 is configured to perform a sending-related operation of the terminal device in the foregoing method embodiments.

In a possible implementation, the receiving unit 1100 is configured to receive a first synchronization signal block SSB from a network device, where the first SSB is one of P SSBs, the P SSBs belong to a same synchronization signal burst set, and P is an integer greater than 1. The sending unit 1300 is configured to send a preamble sequence on a first random access occasion RO associated with the first SSB, where the first RO is one or more ROs associated with the first SSB in a first physical random access channel PRACH resource or a second PRACH resource. The P SSBs are associated with ROs in the first PRACH resource in a first SSB index order, the P SSBs are associated with ROs in the second PRACH resource in a second SSB index order, and the first SSB index order is different from the second SSB index order. For possible specific implementations of the first SSB index order and the second SSB index order, and a quantity of frequency division multiplexed ROs in the first PRACH resource and the second PRACH resource in frequency domain, refer to the descriptions in the embodiment corresponding to FIG. 8. Details are not described herein again.

Optionally, the receiving unit 1100 is further configured to receive first information from the network device, where the first information indicates that a quantity of frequency division multiplexed ROs in the second PRACH resource is M.

Optionally, the communication apparatus 1000 further includes a processing unit 1200. The processing unit 1200 is configured to perform a processing-related operation of the terminal device in the foregoing method embodiments.

Optionally, the receiving unit 1100 is further configured to receive first signaling from the network device, where the first signaling includes second information and position information of the second PRACH resource in one PRACH periodicity, and the second information includes a common parameter used to determine time domain position information of the first PRACH resource and time domain position information of the second PRACH resource. The receiving unit 1100 is further configured to receive second signaling from the network device, where the second signaling includes information indicating a position of the first PRACH resource in one PRACH periodicity. The processing unit 1200 is configured to determine a time domain position of the second PRACH resource based on the first signaling. The processing unit 1200 is further configured to determine a time domain position of the first PRACH resource based on the common parameter and the second signaling. For descriptions of the common parameter, refer to the descriptions in the embodiment corresponding to FIG. 17. Details are not described herein again.

Optionally, the sending unit 1300 and the receiving unit 1100 may alternatively be integrated into a transceiver unit that has both a receiving function and a sending function. This is not limited herein.

Optionally, in an implementation in which the communication apparatus 1000 is the terminal device in the method embodiment, the sending unit 1300 may be a transmitter, and the receiving unit 1100 may be a receiver. The receiver and the transmitter may alternatively be integrated into a transceiver. The processing unit 1200 may be a processing apparatus.

A function of the processing apparatus may be implemented by hardware, or may be implemented by executing corresponding software by hardware. For example, the processing apparatus may include a memory and a processor. The memory is configured to store a computer program, and the processor reads and executes the computer program stored in the memory, to enable the communication apparatus 1000 to perform an operation and/or processing performed by the terminal device in the method embodiments. Optionally, the processing apparatus may include only a processor, and the memory configured to store the computer program is located outside the processing apparatus. The processor is connected to the memory through a circuit/wire, to read and execute the computer program stored in the memory. For another example, the processing apparatus may be a chip or an integrated circuit.

Optionally, in an implementation in which the communication apparatus 1000 is a chip or an integrated circuit installed in a terminal device, the sending unit 1300 and the receiving unit 1100 may be communication interfaces or interface circuits. For example, the sending unit 1300 is an output interface or an output circuit, and the receiving unit 1100 is an input interface or an input circuit. The processing unit 1200 may be a processor or a microprocessor integrated on the chip or the integrated circuit. This is not limited herein.

In another possible design, the communication apparatus 1000 includes a receiving unit 1100 and a sending unit 1300. The communication apparatus 1000 may implement steps or procedures performed by the network device corresponding to the foregoing method embodiments. For example, the communication apparatus 1000 may be a network device, or may be a chip or a circuit disposed in a network device. The receiving unit 1100 is configured to perform a receiving-related operation of the terminal device in the foregoing method embodiments, and the sending unit 1300 is configured to perform a sending-related operation of the terminal device in the foregoing method embodiments.

In a possible implementation, the sending unit 1300 is configured to send a first synchronization signal block SSB to a terminal device, where the first SSB is one of P SSBs, the P SSBs belong to a same synchronization signal burst set, and P is an integer greater than 1. The receiving unit 1100 is configured to receive, from the terminal device, a preamble sequence on a first RO associated with the first SSB, where the first RO is one or more ROs associated with the first SSB in a first physical random access channel PRACH resource or a second PRACH resource. The P SSBs are associated with random access occasions ROs in the first PRACH resource in a first SSB index order, the P SSBs are associated with ROs in the second PRACH resource in a second SSB index order, and the first SSB index order is different from the second SSB index order. For a possible specific implementation order of the first SSB index order and the second SSB index order, and a quantity of frequency division multiplexed ROs in the first PRACH resource and the second PRACH resource in frequency domain, refer to the descriptions in the embodiment corresponding to FIG. 8. Details are not described herein again.

Optionally, the sending unit 1300 is further configured to send first information to the terminal device, where the first information indicates that a quantity of frequency division multiplexed ROs in the second PRACH resource is M.

Optionally, the sending unit 1300 is further configured to send first signaling to the terminal device, where the first signaling includes second information and position information of the second PRACH resource in one PRACH periodicity, and the second information includes a common parameter used to determine time domain position information of the first PRACH resource and time domain position information of the second PRACH resource. The sending unit 1300 is further configured to send second signaling to the terminal device, where the second signaling includes information indicating a position of the first PRACH resource in one PRACH periodicity. For descriptions of the common parameter, refer to the descriptions in the embodiment corresponding to FIG. 17. Details are not described herein again.

Optionally, the communication apparatus 1000 further includes a processing unit 1200. The processing unit 1200 is configured to perform a processing-related operation of the network device in the foregoing method embodiments.

Optionally, the sending unit 1300 and the receiving unit 1100 may alternatively be integrated into a transceiver unit that has both a receiving function and a sending function. This is not limited herein.

Optionally, the communication apparatus 1000 further includes a receiving unit 1100. The sending unit 1300 and the receiving unit 1100 may alternatively be integrated into a transceiver unit that has both a receiving function and a sending function. This is not limited herein.

Optionally, in an implementation in which the communication apparatus 1000 is the network device in the method embodiment, the sending unit 1300 may be a transmitter, and the receiving unit 1100 may be a receiver. The receiver and the transmitter may alternatively be integrated into a transceiver. The processing unit 1200 may be a processing apparatus.

A function of the processing apparatus may be implemented by hardware, or may be implemented by executing corresponding software by hardware. For example, the processing apparatus may include a memory and a processor. The memory is configured to store a computer program, and the processor reads and executes the computer program stored in the memory, to enable the communication apparatus 1000 to perform an operation and/or processing performed by the network device in the method embodiments. Optionally, the processing apparatus may include only a processor, and the memory configured to store the computer program is located outside the processing apparatus. The processor is connected to the memory through a circuit/wire, to read and execute the computer program stored in the memory. For another example, the processing apparatus may be a chip or an integrated circuit.

Optionally, in an implementation in which the communication apparatus 1000 is a chip or an integrated circuit installed in a network device, the sending unit 1300 and the receiving unit 1100 may be communication interfaces or interface circuits. For example, the sending unit 1300 is an output interface or an output circuit, and the receiving unit 1100 is an input interface or an input circuit. The processing unit 1200 may be a processor or a microprocessor integrated on the chip or the integrated circuit. This is not limited herein.

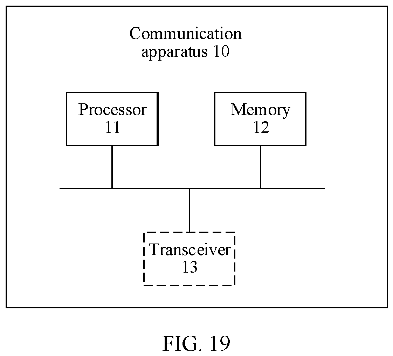

FIG. 19 is a diagram of a structure of a communication apparatus 10 according to this application. The apparatus 10 includes a processor 11. The processor 11 is coupled to a memory 12. The memory 12 is configured to store a computer program or instructions and/or data. The processor 11 is configured to: execute the computer program or the instructions stored in the memory 12, or read the data stored in the memory 12, to perform the method in the foregoing method embodiments.

Optionally, there are one or more processors 11.

Optionally, there are one or more memories 12.

Optionally, the memory 12 and the processor 11 are integrated together, or are disposed separately.

Optionally, as shown in FIG. 19, the apparatus 10 further includes a transceiver 13, and the transceiver 13 is configured to receive and/or send a signal. For example, the processor 11 is configured to control the transceiver 13 to receive and/or send a signal.

In a solution, the apparatus 10 is configured to implement operations performed by the terminal device in the foregoing method embodiments.

For example, the processor 11 is configured to execute the computer program or the instructions stored in the memory 12, to implement related operations performed by the terminal device in the foregoing method embodiments, for example, implement the method performed by the terminal device in the embodiment shown in FIG. 8 or FIG. 17.

In another solution, the apparatus 10 is configured to implement operations performed by the network device in the foregoing method embodiments.

For example, the processor 11 is configured to execute the computer program or the instructions stored in the memory 12, to implement related operations performed by the network device in the foregoing method embodiments, for example, implement the method performed by the network device in the embodiment shown in FIG. 8 or FIG. 17.

In addition, this application further provides a computer-readable storage medium. The computer-readable storage medium stores computer instructions. When the computer instructions are run on a computer, an operation and/or a procedure performed by the terminal device or the network device in the method embodiments of this application are/is performed.

This application further provides a computer program product. The computer program product includes computer program code or instructions. When the computer program code or the instructions is/are run on a computer, an operation and/or a procedure performed by the terminal device or the network device in the method embodiments of this application are/is performed.

In addition, this application further provides a chip. The chip includes a processor. A memory configured to store a computer program is disposed independently of the chip. The processor is configured to execute the computer program stored in the memory, to perform an operation and/or processing performed by the terminal device or the network device in any method embodiment.

Further, the chip may include a communication interface. The communication interface may be an input/output interface, an interface circuit, or the like. Further, the chip may include the memory.

In addition, this application further provides a communication system, including the terminal device and the network device in embodiments of this application.

It should be understood that the processor in embodiments of this application may be an integrated circuit chip, and has a signal processing capability. In an implementation process, steps in the foregoing method embodiments may be implemented by using an integrated logical circuit of hardware in the processor, or by using instructions in a form of software. The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps in the foregoing methods in combination with hardware of the processor.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that, the memory described in this specification is intended to include, but is not limited to, these memories and any memory of another appropriate type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form. The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, some of the technical solutions of this application may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

It should be understood that, the "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be further understood that ordinal numbers such as "first" and "second" mentioned in embodiments of this application are used to distinguish between a plurality of objects, and are not intended to limit sizes, content, an order, a time sequence, priorities, importance, or the like of the plurality of objects. For example, first information and second information do not indicate a difference in an information amount, content, a priority, importance, or the like.

It should be further understood that, in this application, both the terms "when" and "if" mean that a network element performs corresponding processing in an objective status, but do not constitute a limitation on time, do not require that the network element has a determining action during implementation, and do not mean other limitations either.

It should be further understood that, in this application, "at least one" refers to one or more, and "a plurality of" refers to two or more. "At least one item (piece) of the following" or a similar expression thereof means any combination of these items, including any combination of singular items (pieces) or plural items (pieces). For example, at least one of a, b, or c may represent a, b, c, a and b, a and c, b and c, or a, b, and c. It should be further understood that, unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and another combination of A, B, and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule. It should be further understood that the term "and/or" in this specification describes only an association relationship between associated objects and represents that three relationships may exist. For example, A and/or B may represent the following three cases: Only A exists, both A and B exist, and only B exists. A and B may be singular or plural. The character "/" generally indicates an "or" relationship between the associated objects. For example, A/B indicates A or B.

It should be further understood that in embodiments of this application, "B associated with A" indicates that B corresponds to A, and B may be determined based on A. However, it should be further understood that determining B based on A does not mean that B is determined based only on A, but B may be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a first synchronization signal block SSB from a network device, wherein the first SSB is one of P SSBs, the P SSBs belong to a same synchronization signal burst set, and P is an integer greater than 1; and
sending a preamble sequence on a first random access occasion RO associated with the first SSB, wherein the first RO is one or more ROs in a first physical random access channel PRACH resource or a second PRACH resource, wherein
the P SSBs are associated with ROs in the first PRACH resource in a first SSB index order, the P SSBs are associated with ROs in the second PRACH resource in a second SSB index order, and the first SSB index order is different from the second SSB index order.

2. The method according to claim 1, wherein
the first SSB index order is a descending order of SSB indexes, and the second SSB index order is an ascending order of the SSB indexes.

3. The method according to claim 1, wherein
the second SSB index order is an ascending order of SSB indexes, and the first SSB index order is determined based on the second SSB index order.

4. The method according to claim 3, wherein the first SSB index order is determined based on the second SSB index order and a greedy algorithm.

5. The method according to any one of claims 1 to 4, wherein the first PRACH resource is in a subband full duplex time unit, and the second PRACH resource is in an uplink time unit.

6. The method according to any one of claims 1 to 5, wherein
a quantity of frequency division multiplexed ROs in the second PRACH resource is M, wherein M is a positive integer;
a quantity of frequency division multiplexed ROs in the first PRACH resource is N, wherein N is a positive integer less than or equal to M; and
the second PRACH resource is located on a first carrier, the first PRACH resource is located on a first subband that is in the first carrier and that is used for uplink transmission, and bandwidths of the N ROs are less than or equal to a bandwidth of the first subband.

7. The method according to claim 6, further comprising:
receiving first information from the network device, wherein the first information indicates that the quantity of frequency division multiplexed ROs in the second PRACH resource is M.

8. The method according to claim 6 or 7, wherein
when the bandwidth of the first subband is greater than or equal to bandwidths of the M ROs, N is equal to M; or
when the bandwidth of the first subband is less than the bandwidths of the M ROs, N is an integer that is in 1, 2, 4, and 8 and that enables the first PRACH resource to occupy a maximum bandwidth on the first subband.

9. The method according to any one of claims 1 to 8, wherein the method further comprises:
receiving first signaling from the network device, wherein the first signaling comprises second information and position information of the second PRACH resource in one PRACH periodicity, and the second information comprises a common parameter used to determine time domain position information of the first PRACH resource and time domain position information of the second PRACH resource;
receiving second signaling from the network device, wherein the second signaling comprises information indicating a position of the first PRACH resource in one PRACH periodicity;
determining a time domain position of the second PRACH resource based on the first signaling; and
determining a time domain position of the first PRACH resource based on the common parameter and the second signaling.

10. The method according to claim 9, wherein the common parameter comprises one or more of the following parameters:
a PRACH periodicity, a preamble configuration, and a quantity and positions of ROs in one PRACH slot.

11. A communication method, comprising:
sending a first synchronization signal block SSB to a terminal device, wherein the first SSB is one of P SSBs, the P SSBs belong to a same synchronization signal burst set, and P is an integer greater than 1; and
receiving, from the terminal device, a preamble sequence on a first RO associated with the first SSB, wherein the first RO is one or more ROs in a first physical random access channel PRACH resource or a second PRACH resource, wherein
the P SSBs are associated with random access occasions ROs in the first PRACH resource in a first SSB index order, the P SSBs are associated with ROs in the second PRACH resource in a second SSB index order, and the first SSB index order is different from the second SSB index order.

12. The method according to claim 11, wherein
the first SSB index order is a descending order of SSB indexes, and the second SSB index order is an ascending order of the SSB indexes.

13. The method according to claim 11, wherein
the second SSB index order is an ascending order of SSB indexes, and the first SSB index order is determined based on the second SSB index order.

14. The method according to claim 13, wherein the first SSB index order is determined based on the second SSB index order and a greedy algorithm.

15. The method according to any one of claims 11 to 14, wherein the first PRACH resource is in a subband full duplex time unit, and the second PRACH resource is in an uplink time unit.

16. The method according to any one of claims 11 to 15, wherein
a quantity of frequency division multiplexed ROs in the second PRACH resource is M, wherein M is a positive integer;
a quantity of frequency division multiplexed ROs in the first PRACH resource is N, wherein N is a positive integer less than or equal to M; and
the second PRACH resource is located on a first carrier, the first PRACH resource is located on a first subband that is in the first carrier and that is used for uplink transmission, and bandwidths of the N ROs are less than or equal to a bandwidth of the first subband.

17. The method according to claim 16, wherein the method further comprises:
sending first information to the terminal device, wherein the first information indicates that the quantity of frequency division multiplexed ROs in the second PRACH resource is M.

18. The method according to claim 16 or 17, wherein
when the bandwidth of the first subband is greater than or equal to bandwidths of the M ROs, N is equal to M; or
when the bandwidth of the first subband is less than the bandwidths of the M ROs, N is an integer that is in 1, 2, 4, and 8 and that enables the first PRACH resource to occupy a maximum bandwidth on the first subband.

19. The method according to any one of claims 11 to 18, wherein the method further comprises:
sending first signaling to the terminal device, wherein the first signaling comprises second information and position information of the second PRACH resource in one PRACH periodicity, and the second information comprises a common parameter used to determine time domain position information of the first PRACH resource and time domain position information of the second PRACH resource; and
sending second signaling to the terminal device, wherein the second signaling comprises information indicating a position of the first PRACH resource in one PRACH periodicity.

20. The method according to claim 19, wherein the common parameter comprises one or more of the following parameters:
a PRACH periodicity, a preamble configuration, and a quantity and positions of ROs in one PRACH slot.

21. A communication apparatus, comprising a module configured to perform the method according to any one of claims 1 to 10 or claims 11 to 20.

22. A communication apparatus, wherein the communication apparatus comprises at least one processor and at least one memory, the at least one memory is configured to store a computer program or instructions, and the at least one processor is configured to execute the computer program or the instructions in the memory, to perform the method according to any one of claims 1 to 10, or perform the method according to any one of claims 11 to 20.

23. A computer-readable storage medium, wherein the computer-readable storage medium stores computer instructions, and the computer instructions are used to implement the method according to any one of claims 1 to 10, or are used to implement the method according to any one of claims 11 to 20.

24. A computer program product, wherein the computer program product comprises computer program code, and when the computer program code is run on a computer, the method according to any one of claims 1 to 10 is performed, or the method according to any one of claims 11 to 20 is performed.
